# EUROPÄISCHE PATENTSCHRIFT

(11) **EP 2 772 820 B1**
(45) Veröffentlichungstag und Bekanntmachung des Hinweises auf die Patenterteilung: **08.04.2015**
(21) Anmeldenummer: 13156992.3
(22) Anmeldetag: 27.02.2013
(51) Int. Cl.: G05D 23/20

(54) **Elektrische Heizvorrichtung für ein Kraftfahrzeug**
Electrical heating device for a motor vehicle
Dispositif de chauffage électrique pour un véhicule automobile

(43) Veröffentlichungstag der Anmeldung: 03.09.2014
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen-Drusweiler (DE)
(74) Vertreter: Grünecker Patent- und Rechtsanwälte PartG mbB

(56) Entgegenhaltungen:
- DE-A1- 19 918 906
- US-A1- 2003 183 619
- US-A1- 2005 175 328

## Beschreibung

Die vorliegende Erfindung betrifft eine elektrische Heizvorrichtung für ein Kraftfahrzeug. Insbesondere betrifft die vorliegende Erfindung eine elektrische Heizvorrichtung mit PTC-Heizelementen zur Erwärmung eines Luftstroms, die mit einer Überhitzungs-Schutzeinrichtung ausgestattet ist.

Es ist bekannt, dass elektrische Heizungen im Kraftfahrzeug zum Beispiel als Zusatzheizer zum Einsatz kommen, um die Beheizung des Kraftfahrzeuginnenraums und anderer Komponenten, die primär durch die Abwärme des Motors erfolgt, zu ergänzen, oder zum Beispiel auch ein Heizen im Stillstand des Fahrzeugs zu ermöglichen

Die Druckschrift US 2005/175328 A1 beschreibt eine elektrische Luftheizvorrichtung für ein Kraftfahrzeugklimagerät mit einer Mehrzahl von Heizmodulen mit metallischen Widerstandsheizelementen. Als Überhitzungsschutz ist in Reihe zu jedem der Heizelemente ein Schutzelement mit einer Schmelzsicherung geschaltet. Dieses Schutzelement kann zusätzlich mit einem Temperatursensor verbunden sein, der ein Abschalten über die Heizungssteuerung veranlasst, bevor die Schmelzsicherung irreversibel abschaltet.

Im Stand der Technik ist bekannt, für diese Zwecke elektrische Heizvorrichtungen mit sogenannten Widerstandsheizelementen, auch bezeichnet als PTC (positive temperature coefficient)-Heizelemente einzusetzen. Diese sind selbstregelnd, da sie mit zunehmender Erwärmung einen höheren Widerstand zeigen, und deshalb bei gleicher Spannung eine geringere Menge an Strom durchlassen. Somit heizen sich die PTC-Elemente maximal auf eine definierte Temperatur auf. Die selbstregelnden Eigenschaften der PTC-Heizelemente verhindern deshalb eine Überhitzung. Die Oberflächentemperatur eines PTC-Elementes kann eine bestimmte maximale Oberflächentemperatur im Betrieb mit der vorgegebenen Betriebsspannung nicht überschreiten. Diese maximale Oberflächentemperatur ist kennzeichnend für ein PTC-Heizelement. Die von den PTC-Elementen erzeugte Wärme wird an ein fluides Medium, insbesondere an einen Luftstrom oder einen Wasserstrom abgegeben. Die vorliegende Erfindung betrifft Heizvorrichtungen, bei denen ein Luftstrom als Wärmeträger dient.

Von besonderer Bedeutung sind elektrische Heizungen bei Fahrzeugen mit Elektro- oder Hybridantrieb, bei denen die Antriebseinheit des Kraftfahrzeugs keine oder keine ausreichende Abwärme zur Erwärmung oder Klimatisierung des Fahrzeugs abgibt. Hierfür sind Luftheizungen besonders geeignet, da diese durch eine direkte Beheizung der Luft ohne Zwischenschaltung eines Wasserwärmetauschers einen hohen Wirkungsgrad erreichen und kompakt gestaltet werden können. Weiterhin ist es von Vorteil, wenn sich eine Heizvorrichtung für Elektro- oder Hybridfahrzeuge dazu eignet, neben der Versorgung des Innenraums des Kraftfahrzeugs mit der erforderlichen Heizwärme auch die für die ablaufenden Prozesse in einzelnen Anlagenteilen des Kraftfahrzeugs erforderliche oder zumindest diese fördernde Wärme bereitzustellen, wie zum Beispiel zur Vorwärmung des Fahrzeugakkumulators.

Elektrische Heizvorrichtungen für ein Elektro- oder Hybridfahrzeug müssen deshalb leistungsstärker dimensioniert sein als PTC-Heizvorrichtungen, die zum Beispiel als Zusatzheizer in einem herkömmlichen Kraftfahrzeug zum Einsatz kommen, und weisen daher eine Reihe von Besonderheiten auf.

Zunächst sind die in Elektro- und Hybridfahrzeugen verwendeten Heizvorrichtungen für eine Betriebsspannung im automobiltechnischen Hochvoltbereich (oberhalb von 60 Volt, vorzugsweise einige hundert Volt, bis zu 500 Volt, üblicherweise zwischen 280 Volt und 430 Volt (z. B. 300 Volt oder 380 Volt)) vorgesehen, da die verwendeten Fahrzeugbatterien eine solche Bordnetzspannung zur Verfügung stellen. Die Heizleistung derartiger Hochvoltheizer liegt in der Größenordnung von 3 bis 6 kW (Kilowatt), gegenüber einer Größenordnung von 1 bis 1,7 kW (z. B. 1,2 kW) bei 12 Volt- Zuheizern für Kraftfahrzeuge. Dementsprechend enthält ein solcher HochvoltHeizer wesentlich mehr PTC-Heizelemente als eine konventionelle elektrische Zusatzheizung, vorzugsweise mehr als 40, weiter vorzugsweise zwischen 50 und 100, zum Beispiel ca. 60 PTC-Heizelemente gegenüber 10 bis 20 im konventionellen Kraftfahrzeug.

Damit ergibt sich das Problem, die größere Heizleistung an den zu erwärmenden Luftstrom zu übertragen. Hierfür sind prinzipiell zwei Lösungen möglich.

Zum ersten kann die Leistung durch Vergrößerung der von der strömenden Luft kontaktierten Heizeroberfläche erhöht werden. Der Prozess des Wärmeübergangs von der Heizeroberfläche auf den Luftstrom wird zusätzlich durch von der Heizeroberfläche ausgesendete Strahlungswärme unterstützt. Eine Vergrößerung der Heizeroberfläche stößt jedoch beim Einsatz in einem Kraftfahrzeug an ihre Grenzen, da die Größe des Bauraums beim Einbau in ein Heiz-/Klimagerät fest vorgegeben ist.

Zum zweiten kann die übertragene Leistung auch durch eine Erhöhung der Oberflächentemperatur der Heizung erhöht werden. Da hierbei ein größerer Temperaturgradient zwischen der Heizeroberfläche und der strömenden Luft auftritt, kann in der gleichen Zeit mehr Wärme übertragen werden als bei geringerer Oberflächentemperatur. Indem man die Oberflächentemperatur der Heizung gegenüber konventionellen Zuheizern erhöht, lässt sich eine Vergrößerung der Oberfläche vermeiden oder zumindest gering halten. Deshalb ist die zweite Möglichkeit der Erhöhung der Leistungsübertragung an die zu erwärmende Luft besonders für Hochvoltheizvorrichtungen für Fahrzeuge mit Elektroantrieb (Elektro- oder Hybridfahrzeuge) geeignet. Hierbei werden spezielle PTC-Heizelemente eingesetzt, die im Betrieb höhere Oberflächentemperaturen erreichen können als die in konventionellen PTC-Heizern eingesetzten Heizelemente. Eine Konsequenz ist jedoch, dass diese PTC-Heizelemente eine andere (hin zu höheren Temperaturen verschobene) Widerstands- beziehungsweise Leistungscharakteristik haben, und somit erst bei höheren Temperaturen automatisch abregeln.

Daraus ergibt sich jedoch ein zusätzliches Problem der Gewährleistung der Sicherheit bzw. des Schutzes der die Heizvorrichtung umgebenden Komponenten des Kraftfahrzeugs gegen Schäden durch Überhitzung.

Grundsätzlich ist es so, dass im Störungsfall, wenn die Luftzufuhr unterbrochen wird, insbesondere wenn das den Luftstrom erzeugende Gebläse ausfällt, sich die Oberflächentemperatur des PTC-Heizelementes auf die maximale PTC-Oberflächentemperatur erhöht. Dabei reduziert sich die elektrische Leistung auf einen Wert, der nur noch einem Bruchteil der maximal möglichen Leistung entspricht.

Eine entsprechende Störung kann ebenfalls auftreten, wenn bei Ansteuerung einer elektrischen Heizung die Luftzufuhr deutlich vermindert oder unterbrochen wird, ohne dass die zu erzeugende Wärmemenge (vorgegebene Leistung) entsprechend reduziert wird. Eine solche Situation kann bei Störung innerhalb einer automatischen Heizungssteuerung oder auch bei manueller Einstellung einer Heizung in Folge Fehlbedienung auftreten.

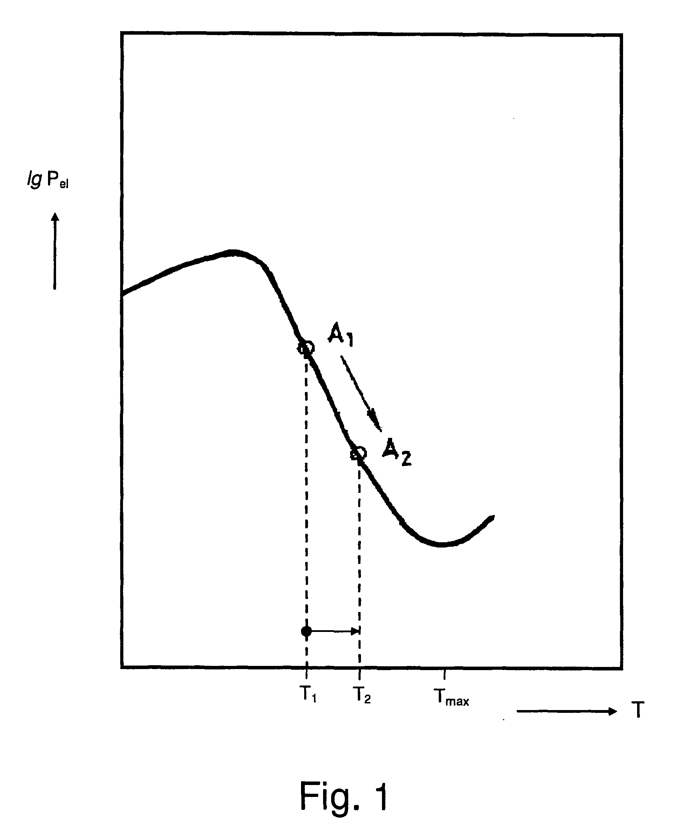

Die Temperaturabhängigkeit der von dem PTC-Element in Wärme umgesetzten elektrischen Leistung Pₑₗ ist in Fig. 1 über der Oberflächentemperatur des PTC-Elementes dargestellt. Bei einer gegebenen Betriebsspannung stellt sich im PTC-Element eine Stromaufnahme (Arbeitspunkt) in Abhängigkeit von der Umgebungstemperatur, d.h. der Temperatur des aufzuheizenden Mediums (Luft) und der Wärmeleitung vom PTC-Element zum aufzuheizenden Medium ein. Ein solcher Arbeitspunkt ist mit dem Arbeitspunkt A₁ bei der Temperatur T₁ in Fig. 1 dargestellt.

Heizt sich das PTC-Element aufgrund einer Störung im Luftstrom auf, so kann die im PTC-Element umgesetzte Wärmemenge nicht mehr abgeführt werden. Das PTC-Element nimmt dann eine höhere Temperatur ein. Sein Arbeitspunkt auf der Kennlinie verschiebt sich weiter nach unten, wie in Fig. 1 mit dem neuen Arbeitspunkt A₂ bei der Temperatur T₂ angegeben. Dabei reduziert sich die Stromaufnahme deutlich und das PTC-Heizelement kann die durch die Dotierung vorgegebene maximale Temperatur Tₘₐₓ erreichen.

In konventionellen elektrischen Luftheizvorrichtungen werden PTC-Elemente verwendet, bei denen die maximal im Betrieb erreichbaren Oberflächentemperaturen des PTC-Elementes selbst (Temperaturen, bei denen die PTC-Elemente aufgrund des hohen Widerstands selbsttätig abregeln) bei höchstens etwa 170°C liegen. In diesem Bereich tritt noch keine Beschädigung der Umgebung auf, da selbst bei Ausfall der Wärme abtransportierenden Luftströmung die Temperaturen im Umgebungsbereich der Heizvorrichtung noch gut von den dort verwendeten Materialien vertragen werden (z. B. den Kunststoffen, die im Heiz-/Klimagerät üblicherweise verwendet werden). Insbesondere gilt dies auch deshalb, weil die installierte Heizleistung, üblicherweise mit einer Größenordnung von 1000 Watt, deutlich kleiner ist als bei Hochvoltheizern.

Um eine Störung, insbesondere einen Ausfall des Gebläses, sicher erkennen zu können, ist es bei Verwendung von PTC-Heizelementen, die keine höheren Oberflächentemperaturen als etwa 170°C erreichen können, ausreichend, einen Leistungsschwellwert zu definieren, der einer minimalen, im Normalbetrieb auftretenden Heizerleistung entspricht. Wenn durch das selbsttätige Abregeln die Heizerleistung unter einen solchen Leistungsschwellwert sinkt, kann man sicher davon ausgehen, dass die PTC-Heizelemente automatisch abgeregelt haben und eine Lüfterstörung vorliegt. Eine solche Vorgehensweise ist in der europäischen Patentschrift EP 1 350 647 B1 beschrieben.

Druckschrift DE 199 18 906 A1 beschreibt eine PTC-Heizvorrichtung, bei der ein Temperatursensor im Endbereich eines Heizblocks eines Heizregisters, in der Lücke zwischen dem Ende eines Radiatorelements und dem Rahmen des Heizblocks im Luftstrom angeordnet ist. Dieser soll die Luft-Eingangstemperatur am Heizregister bzw. die Luft-Austrittstemperatur am Heizwärmetauscher messen.

Wie bereits ausgeführt, ist es jedoch bei den Hochvolt-Heizern für Fahrzeuge mit Elektroantrieb vorteilhaft, PTC-Elemente zu verwenden, die erst bei deutlich höheren Temperaturen abregeln, dafür aber auch im Regelbetrieb höhere Oberflächentemperaturen gestatten. Die maximal mögliche Oberflächentemperatur der PTC-Heizelemente selbst liegt jetzt in einem Bereich von mindestens 180°C. Je nach Ausführungsform sind maximale Oberflächentemperaturen im Bereich von 200 °C möglich. Solche Heizelemente ermöglichen auch eine höhere Betriebstemperatur der Wärme abstrahlenden Oberfläche der Heizvorrichtung, zum Beispiel Radiatoren, was sich wiederum, wie oben beschrieben, angesichts des im Kraftfahrzeug zur Verfügung stehendem beschränkten Einbauraums vorteilhaft auf die Wärmeleistung auswirkt.

Als Konsequenz aus den wesentlich größeren Heizleistungsanforderungen und damit verbundenen höheren maximal erreichbaren Oberflächentemperaturen der für Fahrzeuge mit Elektroantrieb verwendeten PTC-Elemente ist der oben beschriebene Selbstregelungsmechanismus als Überhitzungsschutz für die Fahrzeugsicherheit zwar grundsätzlich geeignet, aber nicht für Kunststoff-Bauteile in unmittelbarer Heizungsnähe, da Beschädigungen auch auftreten können, wenn diese PTC-Elemente selbsttätig abregeln.

Wesentlich dazu trägt neben der höheren PTC-Temperatur die 3-fache bis 5-fache Heizleistung, z.B. 4 kW gegenüber 1 kW, und die damit verbundene höhere Energiedichte, bei.

Wie erwähnt, werden die aufgrund der Charakteristik maximal möglichen Oberflächentemperaturen der PTC-Elemente dann erreicht, wenn der Luftstrom ausfällt (oder zumindest die Strömungsgeschwindigkeit deutlich absinkt - niedriger Luftvolumenstrom). Im Normalbetrieb sorgt dagegen die strömende Luft dafür, dass ausreichend Wärme abgeführt wird, und die Oberflächentemperatur der PTC-Heizelemente immer unterhalb des maximal möglichen Werts bleibt. Bei konventionellen Heizern mit einer maximalen PTC-Oberflächentemperatur von 170°C und einer Heizleistung von 1000 Watt liegt die maximale Temperatur in Heizungsnähe bei ausgeschaltetem Lüfter in einem Bereich von ca. 130°C. Bei Hochvoltheizern mit 3-5-facher Heizleistung und PTC-Elementen mit einer maximalen Oberflächentemperatur von 180°C oder darüber liegt sie um mindestens etwa 30 bis 60 Grad, z. B. 50 Grad, höher.

Das Heiz-/Klimagerät (HVAC - Heating-Ventilation-Air-Conditioning) ist üblicherweise nur für eine maximale Betriebstemperatur bis 130°C ausgelegt. Das HVAC besitzt jedoch selbst keinen eigenen Schutzmechanismus gegen Überhitzung. Wenn aber im Störungsfall die Oberflächentemperatur der Heizelemente 180°C oder mehr erreicht, so entstehen jedoch auch im Umgebungsbereich im HVAC schnell unzulässig hohe Temperaturen. Ein niedriger oder ausfallender Luftvolumenstrom führt deshalb zu einer unbedingt zu vermeidenden Überhitzung. Dies tritt insbesondere im Fall einer Gebläsestörung/eines Gebläseausfalls auf, kann aber auch dann der Fall sein, wenn - z.B. wegen Beschädigung oder auch Fehlbedienung - durch falsche Stellung der Luftführungsklappen die Luft am Strömen gehindert wird und es zu einem Luftstau kommt.

Bei einer Überhitzung drohen insbesondere folgende Gefahren:
Erstens, die Umgebung der Heizvorrichtung, insbesondere der Kunststoff des Heiz-/Klimagerätes kann beschädigt werden. Mögliche Schäden bei zu großer Temperaturbelastung sind insbesondere ein Verzug des Heizungsgehäuses bis hin zum Schmelzen des Kunststoffs, Luftleckage, Schädigung der Luftführungklappen und Geräusche. Ein Austausch ist aufwändig und verursacht hohe Kosten.

Zweitens, wenn nach einem Lüfterausfall der Lüfter wieder anspringt, so wird eine aufgrund des Hitzestaus innerhalb der Heizvorrichtung entstandene Luftwolke mit einer Temperatur von ca. 180°C weitergeleitet. Dies birgt eine erhebliche Gefahr der Beschädigung weiterer Bauteile, unangenehme Dämpfe/Gerüche überhitzter Kunststoffe und unzulässige Luftaustrittstemperaturen an den Ausströmern im Fahrgastraum.

Demzufolge ist ein zusätzlicher Sicherheitsmechanismus erforderlich, der das Heiz-/Klimagerät vor Beschädigungen und die Fahrzeuginsassen vor Verletzung durch zu heiße Luft schützt.

Auf das selbsttätige Abregeln der PTC-Heizelemente kann hierbei nicht zurückgegriffen werden, da wie beschrieben die maximal erreichbaren Temperaturen der verwendeten PTC-Heizelemente so hoch sind, dass bereits vor deren Erreichen Beschädigungen auftreten können. Es ist also ein externes Eingreifen erforderlich.

Bei modernen PTC-Kraftfahrzeugheizungen, die über eine große Anzahl von Heizelementen verfügen, sind diese Heizelemente häufig in mehreren einzelnen, voneinander getrennten Heizkreisen (Heizstufen) angeordnet. Mit anderen Worten, mehrere räumlich benachbarte PTC-Heizelemente werden zu einer Heizstufe zusammengefasst.

Hierbei sind verschiedene Arten der Leistungssteuerung möglich. Im einfachsten Fall werden alle Heizstufen gleichzeitig angesteuert. Bei steigendem Heizbedarf werden die Heizstufen so angesteuert, dass jede einzelne der Stufen eine zunehmend größere Heizleistung erbringt.

Eine solche Ansteuerung ermöglicht eine gleichmäßig verteilte Aufheizung der gesamten Heizvorrichtung. Nachteilig an einer solchen Leistungssteuerung ist jedoch, dass in der Steuervorrichtung für alle Heizstufen gleichzeitig eine hohe Verlustleistung entsteht.

Diese kann dadurch vermindert werden, dass die von jeder Heizstufe abzugebende Leistung separat einstellbar ist. Dazu werden die einzelnen Heizstufen unabhängig voneinander angesteuert, so dass sie bei steigendem Heizbedarf sequentiell aufgeregelt werden können.

Dies kann insbesondere dadurch erreicht werden, dass bei einem Betrieb unterhalb der maximal möglichen Leistung der gesamten Heizvorrichtung nur eine der Heizstufen (zum Beispiel über eine Pulsweitenmodulation PWM) je nach erforderlicher Heizleistung zwischen Nulllast und Volllast angesteuert wird. Alle anderen Heizstufen werden entweder mit Nulllast oder mit Volllast betrieben.

Bei PTC-Heizern mit mehreren separat einstellbaren Heizstufen kommt es nun für einen wirksamen Überhitzungsschutz zusätzlich darauf an, eine drohende Überhitzung nicht nur generell zu erkennen, sondern auch möglichst präzise lokalisieren zu können, um zielgerichtet eingreifen und eine Komplettabschaltung der Heizung möglichst vermeiden zu können.

Es ist Aufgabe der vorliegenden Erfindung, eine verbesserte, insbesondere für den Einsatz in Fahrzeugen mit Elektroantrieb geeignete, elektrische Heizvorrichtung mit mehreren separat ansteuerbaren Heizstufen bereitzustellen, bei der Gefahren durch Überhitzung sicher erkannt und präzise lokalisiert werden können, um ein gezieltes Eingreifen zu ermöglichen.

Diese Aufgabe wird mit den Merkmalen des Patentanspruchs 1 gelöst.

Es ist der besondere Ansatz der vorliegenden Erfindung, bei einer PTC-Kraftfahrzeugheizung mit mehreren separat ansteuerbaren Heizstufen eine Mehrzahl von Temperatursensoren vorzusehen. Durch eine entsprechende Zuordnung der Temperatursensoren zu den Heizstufen wird ermöglicht, dass eine unzulässig hohe Temperatur nicht nur rechtzeitig erkannt, sondern auch lokalisiert werden kann. Die Verwendung mehrerer, den jeweiligen Heizkreisen zugeordneter Temperatursensoren ermöglicht eine gute Korrelation der von einem Temperatursensor unmittelbar erfassten Temperatur und einer Oberflächentemperatur der entsprechenden Heizstufe. Dadurch kann die Temperatur der Oberfläche der Heizelemente indirekt gemessen werden. Folglich kann Aufschluss darüber bekommen werden, wo genau (bei welcher Heizstufe bzw. welchen Heizstufen) eine Überhitzung droht. Demzufolge kann eine unzulässige Erwärmung rechtzeitig erkannt werden und die Heizleistung einer oder mehrerer betroffener Heizstufen gezielt reduziert werden.

Mit der erfindungsgemäßen Ausgestaltung können die Einbausituation der Heizelemente und Temperaturschichtungen innerhalb des Heiz-/Klimageräts (HVAC - Heating-Ventilation-Air-Conditioning) besser berücksichtigt werden.

Insbesondere ist gemäß einer Ausführungsform der Erfindung für jede Heizstufe separat ein entsprechender Temperatursensor vorgesehen. Alternativ kann ein Temperatursensor auch gleichzeitig mehreren Heizstufen zugeordnet sein. Zum Beispiel kann für jeweils zwei Heizstufen ein mittig angeordneter gemeinsamer Temperatursensor vorgesehen sein.

Vorzugsweise umfasst die erfindungsgemäße Heizvorrichtung mehr als 40, weiter vorzugsweise zwischen 50 und 100, zum Beispiel 60 oder ca. 60 PTC-Heizelemente. Diese sind zu zwei bis zehn Heizstufen zusammengefasst, so dass jede Heizstufe über eine Anzahl von Heizelementen in der Größenordnung von 10, zum Beispiel in einem Bereich von 5 bis 20, umfasst.

Gemäß einer bevorzugten Ausführungsform ist die Steuereinrichtung ausgebildet, die Heizleistung in Abhängigkeit von den von den Temperatursensoren erfassten Temperaturen zu reduzieren.

Weiter vorzugsweise schließt die Steuereinrichtung eine Überwachungseinrichtung ein, zum Überwachen, ob eine von einem Temperatursensor erfasste Temperatur einen vorbestimmten Temperaturwert überschreitet. Die Steuereinrichtung ist weiterhin ausgebildet, die Heizleistung der zugeordneten wenigstens einen Heizstufe zu reduzieren, wenn die Überwachungseinrichtung feststellt, dass die von dem Temperatursensor erfasste Temperatur den vorbestimmten Temperaturwert überschreitet.

Da im Fehlerfall (Lüfterausfall) mit dem Wegfall des Luftstroms automatisch auch der Kühlungseffekt wegfällt, erreichen sowohl die Oberflächentemperaturen der Heizelemente als auch die Temperaturen weiter entfernter Oberflächen durch Wärmeabstrahlung unzulässig hohe Werte, wodurch sich das Gefahrenpotential ergibt, das durch die vorliegende Erfindung eliminiert werden soll. Vorzugsweise wird deshalb der vorbestimmte Temperaturwert (Schwellwert) so gewählt, dass sein Überschreiten ein Indiz dafür ist, dass die Erzeugung des Luftstroms gestört ist, und eine sichere und kontinuierliche Wärmeabführung nicht mehr gewährleistet werden kann. Um Schäden durch Überhitzung zu vermeiden, muss dann einem drohenden Wärmestau durch entsprechende Maßnahmen entgegen gewirkt werden. Wie hoch der Schwellwert für die Temperatur konkret gewählt wird, hängt im Einzelfall von der konstruktiven Gestaltung und insbesondere der Anordnung der Temperatursensoren ab.

Weiter vorzugsweise erfolgt die Abschaltung oder Reduzierung erst dann, wenn die Temperatur über einen Zeitraum, der länger ist als eine vorbestimmte Zeitdauer, zum Beispiel 2 bis 3 Minuten, andauert. Damit sollen kurzfristige Schwankungen, die keine Schädigungen hervorrufen können, unberücksichtigt bleiben.

Weiter vorzugsweise wird nach dem Reduzieren der Heizleistung fortlaufend überwacht, ob die von dem zugeordneten Temperatursensor erfasste Temperatur wieder sinkt, das heißt also innerhalb einer weiteren vorbestimmten Zeitdauer den vorbestimmten Temperaturwert wieder unterschreitet. Ist dies nicht der Fall, so wird anschließend sequentiell die Heizleistung weiterer Heizstufen reduziert. Dies kann insbesondere vorzugsweise so geschehen, dass zunächst die Heizleistung von Heizstufen reduziert wird, die eine Heizstufe, deren Heizleistung bereits reduziert wurde, benachbart sind. Nach einer weiteren vorbestimmten Zeitdauer wird dann die Heizleistung aller Heizstufen reduziert. Hierbei kann die Reduktion letztendlich bis zu einer Komplettabschaltung der Heizung führen.

Vorzugsweise wird die Heizleistung im Falle festgestellter Überhitzung entweder stufenweise oder kontinuierlich (zum Beispiel linear) reduziert.

Alternativ vorzugsweise erfolgt die Reduzierung der Heizleistung einer betroffenen Heizstufe auf Null, wenn die gemessene Temperatur den Schwellwert überschreitet. In diesem Fall wird also die Heizleistung ganz abgeschaltet, und an der abgeschalteten Heizung können Maßnahmen zur Störungsfeststellung bzw. -beseitigung ergriffen werden.

Die Heizungsabschaltung bzw. Leistungsabregelung soll eigenständig die Heizung auf die maximal zulässige Temperatur regeln, aber keine dauerhafte Abschaltung bewirken. Deshalb wird weiter vorzugsweise von der Überwachungseinrichtung nach dem Reduzieren der Heizleistung überwacht, ob die von dem Temperatursensor erfasste Temperatur einen zweiten vorbestimmten Temperaturwert unterschreitet, wobei der zweite vorbestimmte Temperaturwert niedriger ist als der erste vorbestimmte Temperaturwert, der zum Reduzieren der Heizleistung führt. Vorzugsweise ist der zweite Temperaturwert mindestens etwa 20 Grad, zum Beispiel 20 bis 30 Grad niedriger zu wählen, als der erste vorbestimmte Temperaturwert. Die Steuereinrichtung ist weiter vorzugsweise so ausgebildet, dass sie die Heizleistung wieder erhöht, wenn die Überwachungseinrichtung feststellt, dass die von dem Temperatursensor erfasste Temperatur den zweiten vorbestimmten Temperaturwert unterschreitet. Bei Erreichen einer zweiten, unteren Schwelltemperatur wird also die Heizleistung wieder aufgeschaltet. Auch das Wiederaufschalten der Heizleistung auf Basis der zweiten Schwelltemperatur kann mit einer Timer-Funktion verknüpft werden, so dass das Aufschalten erst dann erfolgt, wenn die zweite Schwelltemperatur während einer vorbestimmten Zeitdauer unterschritten wird, um kurzzeitige Schwankungen unberücksichtigt zu lassen.

Ebenfalls vorzugsweise ist die Überwachungseinrichtung so ausgebildet, dass sie eine Störung in der Erzeugung des Luftstroms signalisiert, wenn die Überwachungseinrichtung feststellt, dass die von einem Temperatursensor gemessene Temperatur den Schwellenwert überschreitet. Hierbei kann die Signalisierung beispielsweise durch ein akustisches oder ein optisches Signal erfolgen.

Vorzugsweise sind die PTC-Heizelemente so ausgelegt, dass sie eine maximale Oberflächentemperatur von 180°C oder mehr erreichen können. Wie bereits ausgeführt, müssen PTC-Heizelemente verwendet werden, die solche Oberflächentemperaturen erreichen können, um trotz begrenztem Einbauraum die bei Fahrzeugen mit Elektroantrieb erforderlichen hohen Heizleistungen an die Luft übertragen zu können. Andererseits ist bei Verwendung derartiger PTC-Heizelemente der Selbstregelungseffekt nicht geeignet, eine unzulässige Erwärmung (Überhitzung) zuverlässig zu verhindern, da das selbsttätige Abregeln erst in einem Temperaturbereich auftritt, der für die Vermeidung von Schäden bereits zu hoch ist. Deshalb ist die erfindungsgemäße Lösung bei Einsatz derartiger PTC-Heizelemente besonders vorteilhaft. Ebenfalls vorzugsweise sind die PTC-Heizelemente für eine Betriebsspannung im automobiltechnischen Hochvoltbereich ausgelegt. Eine derartige Auslegung der Heizelemente entspricht dem vorzugsweise vorgesehenen Einsatz in Fahrzeugen mit Elektroantrieb.

Die Temperatursensoren sind außerhalb des Luftstroms angeordnet. Dass die Temperaturerfassung nicht im Luftstrom erfolgt, also keine Temperatur des Luftstroms gemessen wird, ist vorteilhaft, da die Luftstromtemperatur nämlich neben der Heizertemperatur auch von einer Vielzahl weiterer Parameter, insbesondere der Ausgangstemperatur der zu erwärmenden Luft und der Strömungsgeschwindigkeit abhängt. Die erfindungsgemäßen Temperatursensoren sollen möglichst gut die indirekte Bestimmung der PTC-Oberflächentemperatur einer oder mehrerer zugeordneter Heizstufen zulassen. Indirekte Bestimmung der Oberflächentemperatur bedeutet, dass die von dem Sensor unmittelbar erfasste Temperatur in guter Näherung ein eindeutiger Indikator für die Oberflächentemperatur der Heizelemente der zugeordneten wenigstens einen Heizstufe ist.

Eine Anordnung außerhalb des Luftstroms kann zum Beispiel dadurch realisiert werden, dass die elektrische Heizvorrichtung ein Gehäuse mit einem Rahmen für die PTC-Heizelemente der einzelnen Heizstufen umfasst. Dabei werden die Temperatursensoren außerhalb eines durch den Rahmen gebildeten Aufnahmeraums für die PTC-Heizelemente angeordnet. Der Rahmen als Begrenzung des Aufnahmeraums stellt gleichzeitig eine Begrenzung des von dem Luftstrom durchströmbaren Bereichs dar.

Vorzugsweise umfasst die Heizvorrichtung eine Mehrzahl von Wärmeleitelementen, die jeweils Wärme von der wenigstens einen Heizstufe zu dem zugeordneten Temperatursensor leiten. Dies ermöglicht durch die bekannten thermischen Eigenschaften des Wärmeleitelements eine gute Korrelation zwischen der unmittelbar erfassten Temperatur und der Oberflächentemperatur der Heizelemente der zugeordneten Heizstufe. Außerdem ermöglicht es eine räumliche Trennung zwischen dem Abgriff der Temperatur an der Heizer-/Radiatoroberfläche und der Position des Temperatursensors besonders einfach, die jeweiligen Temperaturen der Heizkreise separat zu erfassen und zu verarbeiten.

Gemäß einer weiteren bevorzugten Ausführungsform umfasst die Heizvorrichtung mit den PTC-Heizelementen in wärmeleitendem Kontakt stehende Radiatorelemente zur Wärmeabstrahlung. Diese können insbesondere in Form von Heizrippen (Wellrippen) ausgeführt sein. Weiterhin können eine Mehrzahl von Heizrippen (Heizrippenlagen) in einem schichtartigen Aufbau zwischen einer Mehrzahl von Heizelementen angeordnet sein, wobei mindestens eine der Heizrippenlagen von dem jeweiligen Wärmeleitelement kontaktiert wird.

Gemäß einer weiteren bevorzugten Ausführungsform kontaktiert das Wärmeleitelement direkt das wenigstens eine PTC-Heizelement. Hierdurch kann eine besonders gute Korrelation der von dem Temperatursensor gemessenen Temperatur mit der Oberflächentemperatur des Heizelements erreicht werden, da der Kontakt des wärmeleitenden Elements direkt an der Wärmequelle erfolgt.

Vorzugsweise bildet das Gehäuse der Heizvorrichtung neben dem Rahmen für die Heizelemente ein Steuergehäuse aus, in dem die Steuereinrichtung angeordnet ist. Dabei bilden Rahmen und Steuergehäuse weiter vorzugsweise eine bauliche Einheit. Diese kann zum Beispiel dadurch realisiert sein, dass das Steuergehäuse auf den, den Heizblock tragenden Rahmen aufgesteckt wird. Durch eine solche Gestaltung wird einerseits eine besonders kompakte Bauweise realisiert und andererseits wird die Steuereinrichtung vor dem Luftstrom sowie vor äußeren Einflüssen, etwa durch Tauwasser vom Verdampfer der Klimaanlage, geschützt.

Vorzugsweise bildet das Gehäuse zwischen den Heizelementen der Heizstufen und der Steuereinrichtung eine Trennwand aus, die Aufnahmeeinrichtungen aufweist, in die die Temperatursensoren wärmeleitend eingebettet sind. Die Trennwand besteht vorzugsweise aus Kunststoff. Weiter vorzugsweise besteht das gesamte Gehäuse aus Kunststoff, vorzugsweise aus besonders hitzebeständigem Kunststoff. Aus Kostengründen wird aber für von der eigentlichen Heizvorrichtung weiter entfernte Komponenten des Heiz-/Klimagerätes auf solche speziellen Kunststoffe verzichtet. Ebenfalls vorzugsweise werden die Aufnahmeeinrichtungen jeweils durch einen topfförmigen Zapfen gebildet, der von einem Anschlussende des jeweiligen Wärmeleitelements formschlüssig umgriffen ist. Zum Beispiel können die Wärmeleitelemente an dem der Wärmequelle gegenüber liegenden Ende angeformte Hülsen aufweisen, die wiederum die Zapfen formschlüssig umschließen. Insbesondere sind weiter vorzugsweise die Wärmeleitelemente an dem PTC-Heizelement oder dem Radiatorelement anliegende Wärmeleitbleche, die an ihrem Anschlussende Kontakthülsen ausformen, die auf die Zapfen aufgesteckt werden. Die Temperatursensoren können in die Aufnahmeeinrichtungen (insbesondere: Hohlräume im Inneren der Zapfen) mittels einer Vergussmasse oder Wärmeleitpaste eingebettet sein.

Gemäß einer bevorzugten Ausführungsform sind die Heizelement und Radiatorelemente in Form eines Heizblocks so angeordnet, dass mehrere parallele Heizrippenlagen ausgebildet sind, zwischen denen wenigstens ein PTC-Heizelement aufgenommen ist. Das Wärmeleitelement ist dabei als durchgehende Lage des Heizblocks ausgebildet, das heißt es hat die gleiche Länge wie die Heizrippenlagen bzw. das PTC-Heizelement.

Gemäß einer alternativen bevorzugten Ausführungsform einer Heizvorrichtung mit einem Radiator zur Wärmeabstrahlung in Form einer Mehrzahl von Radioatorelementen (Wellrippen) sind die Temperatursensoren so angeordnet, dass sie jeweils in einen hierfür geschaffenen (insbesondere von der Konvektion des Luftstroms) abgeschotteten Raum in unmittelbarer Nähe eines der Radiatorelemente hinein ragen. In diesem Raum entsteht durch die Wärmestrahlung insbesondere ausgehend von dem Radiator ein Wärmestau, der dazu führt, dass die Temperatur in dem geschlossenen Raum gut mit der Oberflächentemperatur der PTC-Heizelemente korreliert. Eine solche Ausführungsform ist konstruktiv besonders einfach und ermöglicht eine einfache Herstellung.

Gemäß einer weiteren alternativen bevorzugten Ausführungsform kontaktieren die Temperatursensoren jeweils direkt eine wärmeabstrahlende Oberfläche einer Heizstufe. Vorzugsweise handelt es sich bei den von den Temperatursensoren kontaktierten wärmeabstrahlenden Oberflächen um Metalloberflächen der Heizvorrichtung.

Weiter vorzugsweise sind die von den Temperatursensoren kontaktieren Metalloberflächen Radiatorelemente, weiter vorzugsweise in Form von Heizrippen.

Vorzugsweise umfasst die elektrische Heizvorrichtung ein Gebläse zur Erzeugung des Luftstroms. Alternativ ist eine Erzeugung des Luftstroms außerhalb des Bereichs der elektrischen Heizvorrichtung möglich.

Gemäß einem weiteren bevorzugten Aspekt der vorliegenden Erfindung wird eine Kraftfahrzeuginnenraumheizung mit einer elektrischen Heizvorrichtung gemäß dem vorgenannten Aspekt der vorliegenden Erfindung bereitgestellt.

Eine erfindungsgemäße Heizung ist jedoch alternativ auch für andere Aufgaben im Kraftfahrzeug, zur Bereitstellung erforderlicher Prozesswärme zum Vorwärmen oder Warmhalten betriebswichtiger Teile, wie zum Beispiel Batterie, einsetzbar.

Weitere vorteilhafte Ausgestaltungen sind Gegenstand der Unteransprüche.

Im Folgenden wird die vorliegende Erfindung anhand bevorzugter Ausführungsformen im Zusammenhang mit den beiliegenden Zeichnungen erläutert, in denen:
- Fig. 1: ein Diagramm der in einem PTC-Heizelement umgesetzten elektrischen Leistung in Abhängigkeit von der Temperatur zeigt;
- Fig. 2: Widerstands-Temperatur-Kennlinien von PTC-Elementen mit unterschiedlichen maximal erreichbaren Oberflächentemperaturen im Vergleich zeigt;
- Fig. 3: ein Beispiel für den Einsatz einer erfindungsgemäßen elektrischen Heizung zeigt;
- Fig. 4: den Aufbau einer Heizvorrichtung gemäß einer Ausführungsform der vorliegenden Erfindung mit einer Schnittdarstellung von Aufnahmeeinrichtungen für Temperatursensoren zeigt;
- Fig. 5: den Aufbau einer Heizvorrichtung gemäß einer Ausführungsform der vorliegenden Erfindung mit einer Darstellung des formschlüssigen Anschlusses von Wärmeleitelementen an die Aufnahmeeinrichtungen für Temperatursensoren zeigt;
- Fig. 6: eine Detaildarstellung einer erfindungsgemäßen elektrischen Heizung gemäß der Ausführungsform von Fig. 5 zeigt;
- Fig. 7: eine Detaildarstellung eines Schnitts einer Aufnahmeeinrichtung für einen Temperatursensor zeigt;
- Fig. 8: eine Detaildarstellung einer weiteren Ausführungsform der vorliegenden Erfindung zeigt, bei der ein Wärmeleitelement ein PTC-Heizelement direkt kontaktiert;
- Fig. 9: eine schematische Darstellung der Anordnung eines Temperaturfühlers in einer Heizvorrichtung gemäß einer anderen Ausführungsform der vorliegenden Erfindung ist;
- Fig. 10: eine schematische Darstellung der Anordnung eines Temperaturfühlers in einer Heizvorrichtung gemäß einer weiteren Ausführungsform der vorliegenden Erfindung ist;
- Fig. 11: eine schematische Darstellung der Anordnung eines Temperaturfühlers in einer Heizvorrichtung gemäß einer nochmals anderen Ausführungsform der vorliegenden Erfindung ist;
- Fig. 12: eine schematische Darstellung des geschichteten Aufbaus der in den Heizvorrichtungen gemäß Fig. 4 bis 11 angeordneten Heizelemente und Radiatorelemente darstellt; und
- Fig. 13: ein Ablaufdiagramm für ein Verfahren gemäß der vorliegenden Erfindung darstellt.

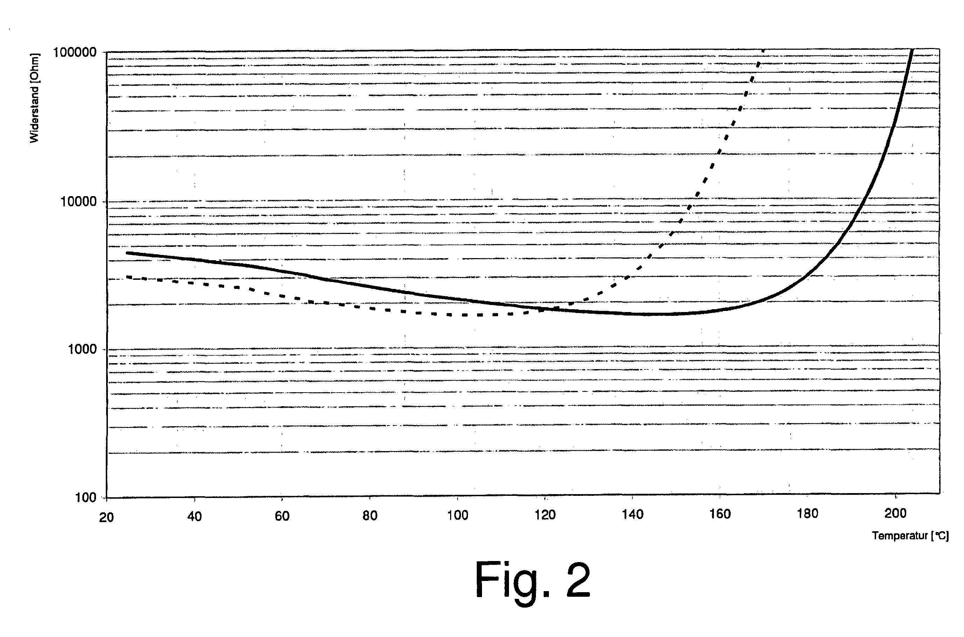

Fig. 2 stellt die Widerstands-Temperatur-Charakteristik zweier verschiedener PTC-Heizelemente im Vergleich dar. Die beiden PTC-Heizelemente unterscheiden sich durch ihre im Betrieb maximal erreichbaren Oberflächentemperaturen. Während bei dem der gestrichelten Kurve entsprechenden Heizelement die maximal erreichbare Temperatur ca. 170°C beträgt, liegt diese bei dem der durchgezogenen Kurve entsprechenden Heizelement bei ca. 205°C.

Qualitativ gesehen weisen beide Kurven einen ähnlichen Verlauf auf. Bis zu einer bestimmten (von Element zu Element verschiedenen) Temperatur ist der Verlauf der Widerstands-Temperaturkurven relativ flach. Dieser Bereich entspricht dem flach ansteigenden Bereich am linken Rand der in Fig. 1 gezeigten Kurve. Wenn die Temperatur jedoch den für das jeweilige PTC-Element individuell gültigen bestimmten Wert übersteigt, steigt der Widerstand stark an (man beachte die logarithmische Widerstandsskala in Fig. 2). Diese Temperatur wird Curie-Temperatur oder Bezugstemperatur genannt und entspricht dem Maximum auf der (ebenfalls logarithmischen) Leistungs-Temperatur-Kurve der Fig. 1. Sie liegt bei dem Heizelement mit der gestrichelten Kurve bei ca. 100°C und bei dem Heizelement mit der durchgezogenen Kurve bei ca. 150°C. Wie im Zusammenhang mit Fig. 1 erläutert, wird das PTC-Heizelement im Regelbetrieb in dem ansteigenden Abschnitt, bei einer Arbeitstemperatur betrieben, die etwas höher ist als die Bezugstemperatur. Die maximale Temperatur (oberes Ende der jeweiligen Kurve) wird im Regelbetrieb nicht erreicht, da durch den Luftstrom ständig Wärme abgeführt wird.

Im Störungsfalle jedoch, bei Ausfall des Luftstroms, versagt die Wärmeabfuhr, und der Arbeitspunkt verschiebt sich auf der Kennlinie der Fig. 2 nach oben. Bei in konventionellen Heizern verwendeten PTC-Elementen (gestrichelte Kurve) liegt die maximal erreichbare Temperatur in einem Bereich, in dem noch kein Schaden in der Umgebung auftritt. Deshalb reicht der Selbstregelungseffekt der PTC-Heizelemente bei konventionellen Heizern aus, um Schäden zu verhindern.

Im Falle von Hochvolt-Heizern werden jedoch PTC-Elemente verwendet (durchgezogene Kurve), deren maximal erreichbare Temperatur in einem Bereich liegt, in dem bereits Beschädigungen in der Umgebung auftreten können.

In diesem Fall kann man sich deshalb nicht auf den Selbstregelungseffekt des PTC-Heizelementes verlassen. Bereits Temperaturen unterhalb der maximal erreichbaren Temperatur des PTC-Elements stellen in diesem Falle eine Überhitzung dar. Eine solche Überhitzung muss sicher erkannt werden und eine weitere Erwärmung muss vermieden werden, bzw. ein Absinken der Temperatur in zulässige Bereiche eingeleitet werden.

Ziel der vorliegenden Erfindung ist es deshalb, eine Heizvorrichtung bereitzustellen, bei der unzulässig hohe Oberflächentemperaturen, wie sie beispielsweise beim Lüfterausfall oder falscher Klappenstellung auftreten, zuverlässig erkannt werden können, obwohl diese unzulässig hohen Temperaturen niedriger sind, als die maximal erreichbare Oberflächentemperatur des verwendeten PTC-Elements.

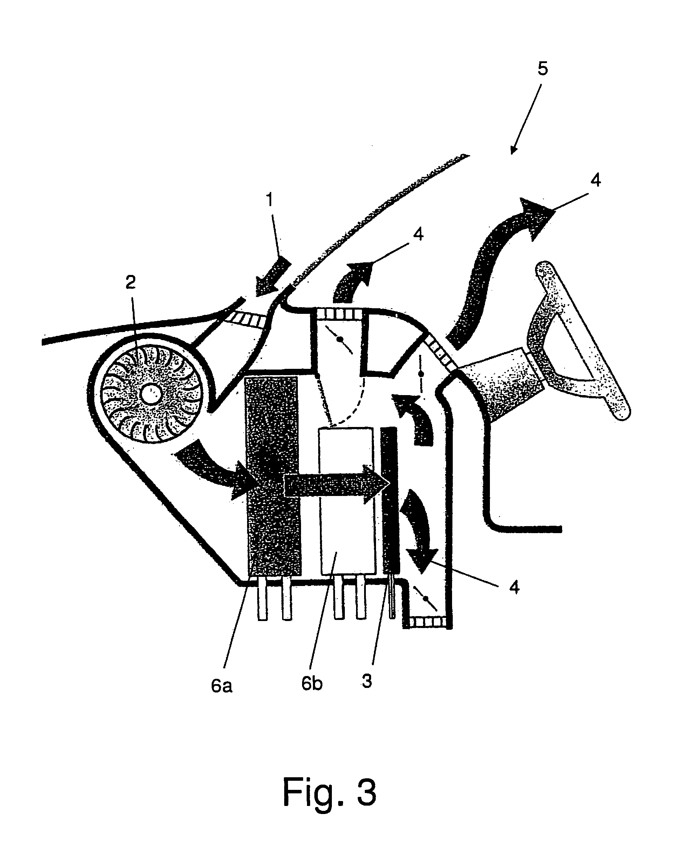

Fig. 3 zeigt den grundsätzlichen Aufbau bei der Verwendung eines erfindungsgemäßen Heizsystems zur Innenraumbeheizung eines Kraftfahrzeugs. Dabei ist das Heizsystem in eine Kfz-Klimaanlage (Heiz-/Klimagerät - HVAC) integriert. Von einem Gebläse 2 wird Außenluft 1 angesaugt, und an der Heizung 3 entlang geführt. Anschließend wird die erwärmte Luft 4 dem beabsichtigten Einsatzzweck zugeführt, indem sie in den Innenraum 5 geblasen wird. Dabei kann die Luft bei Integration in eine Klimaanlage zuvor über einen Verdampfer 6A und eine weitere Fahrzeugheizung 6B geleitet werden, bevor sie über die elektrische Heizvorrichtung 3 strömt.

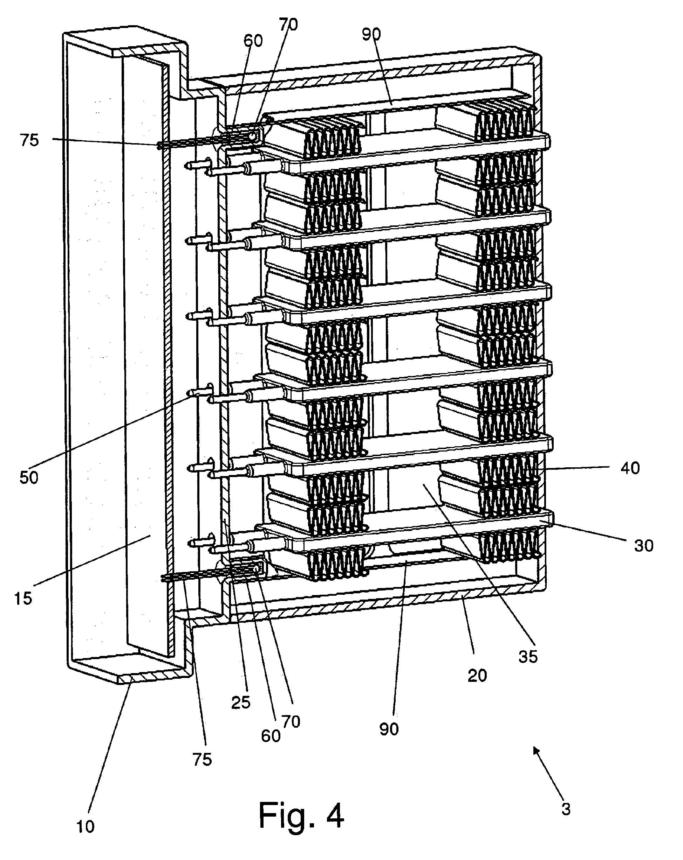

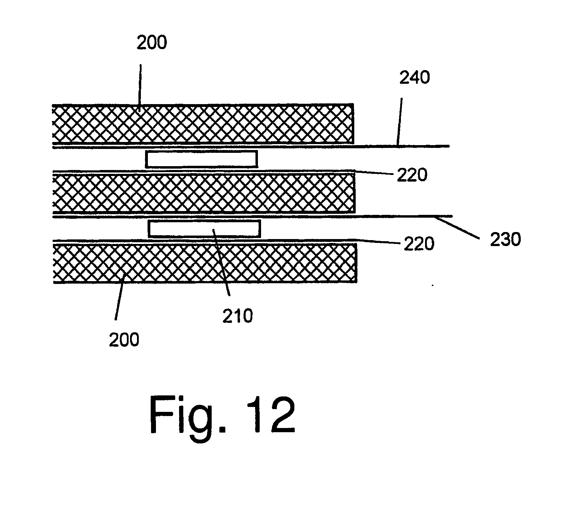

Der grundlegende mechanische Aufbau einer Heizvorrichtung 3 gemäß einer Ausführungsform der vorliegenden Erfindung ist in Fig. 4 dargestellt. Fig. 4 zeigt auf der linken Seite im Schnitt einen Teil eines Steuergehäuses 10 zur Aufnahme der Komponenten der Elektronik für die Heizungssteuerung. Die Steuereinrichtung 15 wird hierbei vorzugsweise in Form einer bestückten Platine realisiert (im Bild nicht im Detail dargestellt). Die rechte Seite zeigt eine Schnittdarstellung eines Heizblocks, bei dem in einem geschichteten Aufbau in einem Rahmen 20 die PTC-Heizelemente 30 eingebaut sind. Zur Abgabe der Wärme an die durchströmende Luft dienen Radiatorelemente 40, die in dem geschichteten Aufbau innerhalb der Rahmenkonstruktion jeweils zwischen den Heizelementen 30 angebracht sind. Gemäß einer im Bild dargestellten bevorzugten Ausführungsform sind die Radiatorelemente 40 in Form von Heizrippen (Wellrippen) ausgebildet. Die Wellrippen bilden eine große Oberfläche für die durchströmende Luft und bestehen z.B. aus Aluminium. Die Details des geschichteten Aufbaus werden weiter unten unter Bezug auf Fig. 12 erläutert.

Wie der Zeichnung weiter zu entnehmen ist, bildet das Steuergehäuse 10 mit dem Rahmen 20 eine bauliche Einheit. Der Aufnahmebereich 35 für den Heizblock, der im Betrieb von dem Luftstrom 4 durchströmt wird, ist von dem Innern des Steuergehäuses durch die Trennwand 25 getrennt. Diese dient damit auch der Abdichtung der Steuervorrichtung 15 von dem Luftstrom 4. In dem dargestellten Ausführungsbeispiel ist die Trennwand 25 Bestandteil des Steuergehäuses 10. Aus dem Aufnahmebereich 35 werden Anschlüsse 50 zur Stromversorgung der PTC-Heizelemente 30 heraus- und durch die Trennwand 25 in das Steuergehäuse 10 hineingeführt. Die unmittelbare Stromzuführung zu den PTC-Heizelementen erfolgt über Kontaktbleche (im Bild nicht detailliert dargestellt). Für weitere Details zu den Kontaktblechen wird ebenfalls auf die weiter unten folgende allgemeine Darstellung unter Bezug auf Fig. 12 verwiesen.

Die erfindungsgemäßen Temperatursensoren 70 sind in Aufnahmeeinrichtungen in Form von am Steuergehäuse 10 (in der Trennwand 25) ausgebildeten topfförmigen Zapfen 60 eingebettet. Die Zapfen 60 sind hohl ausgeführt und verfügen jeweils über eine Öffnung in das Innere des Steuergehäuses 10, durch die die elektrischen Anschlüsse 75 der Temperatursensoren 70 an die Steuereinrichtung 15 geführt werden.

Für die Zuführung der Wärme von den Heizelementen 30 zu den Temperatursensoren 70 sind jeweils Wärmeleitelemente 90 vorgesehen. Die Wärmeleitelemente 90 kontaktieren einerseits jeweils ein Radiatorelement 40 und besitzen andererseits jeweils eine angeformte Hülse, die die Zapfen 60 formschlüssig umgreift. Die Wärmeleitelemente 90 dienen als Wärmeübertrager und bestehen aus gut Wärme leitendem Material (zum Beispiel Aluminium, Kupfer oder eine geeignete Legierung). Sie sind als durchgehende Lage des Heizblocks ausgebildet.

In der in Fig. 4 dargestellten Ausführungsform sind jeweils zwei Wärmeleitelemente 90 und zwei Temperatursensoren 70, entsprechend zwei Heizstufen (Heizkreisen) gezeigt, wobei die Wärmeleitelemente 90 jeweils am untersten bzw. am obersten dargestellten Radiatorelement 40 anliegen.

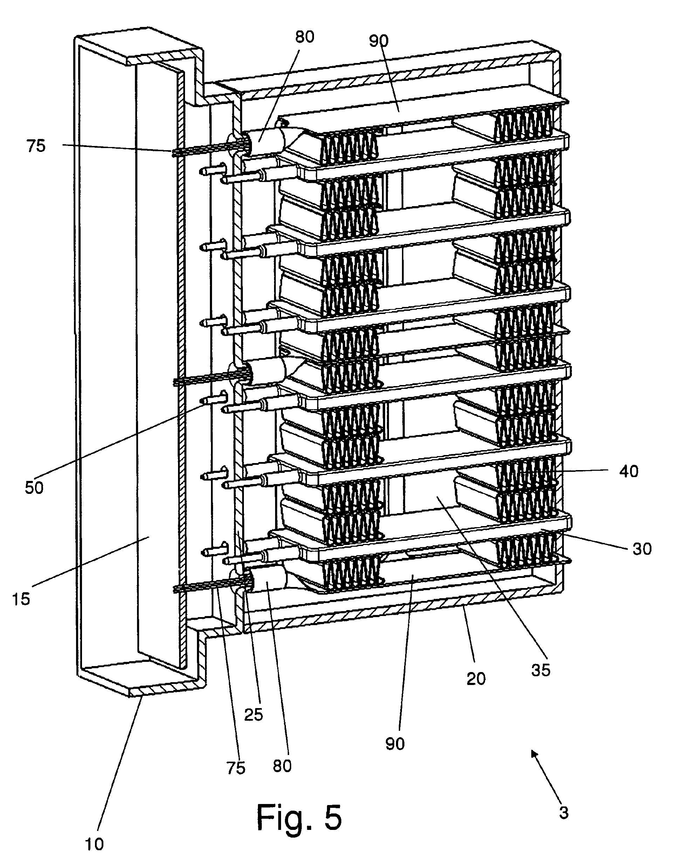

Eine ähnliche Schnittdarstellung des Aufbaus einer erfindungsgemäßen Heizvorrichtung 3 ist in Fig. 5 gezeigt, wobei gleiche Bezugszeichen gleiche Elemente bedeuten und deren Beschreibung deshalb hier nicht wiederholt wird.

Im Unterschied zu der Ausführungsform aus Fig. 4 sind in Fig. 5 drei Wärmeleitelemente 90, entsprechend drei Temperatursensoren dargestellt.

Bezüglich der Zuordnung der Mehrzahl der Temperatursensoren zu der Mehrzahl von Heizkreisen kommt es grundsätzlich darauf an, dass die Temperaturerfassung räumlich innerhalb des Heizregisters, in dem die PTC-Heizelemente der Heizstufen angeordnet sind erfolgt. Nur dadurch kann eine drohende Überhitzungsgefahr lokalisiert und einer oder einigen wenigen Heizstufen zugeordnet werden.

Dies lässt sich am einfachsten und präzisesten dadurch erreichen, dass jeder Heizstufe separat ein Temperatursensor zugeordnet wird, und dieser - zum Beispiel gemäß einer der vorstehend und nachfolgend beschriebenen Ausführungsformen - eine Temperatur erfasst, die charakteristisch für die Oberflächentemperatur der jeweiligen Heizstufe ist.

Eine solche Lösung verlangt natürlich einiges an konstruktivem Aufwand. Dieser und damit die Kosten können reduziert werden, indem man für eine Mehrzahl benachbarter Heizstufen nur einen einzigen Temperatursensor vorsieht. Dieser kann zum Beispiel so ausgeführt sein, dass der Temperaturabgriff in der Mitte zwischen zwei zugeordneten benachbarten Heizstufen erfolgt und der Sensor somit eine Durchschnittstemperatur erfasst. Auch ist es bei einer kleinen Mehrzahl von zu einem Temperatursensor zugeordneten Heizstufen (z.B. zwei oder drei) möglich, die Temperatur einer dieser Heizstufen zu erfassen, welche bei räumlicher Nähe als gute Näherung auch für die benachbarten Heizstufen gelten kann.

Weiterhin unterscheidet sich die Darstellung der Fig. 5 von derjenigen aus Fig. 4 dadurch, dass die Aufnahmeeinrichtungen (Zapfen) für die Temperatursensoren nicht im Schnitt sondern als Außenansicht dargestellt sind. Es sind dementsprechend in der Zeichnung nur die an den Wärmeleitelementen 90 auf den der Wärmequelle gegenüber liegenden Seiten ausgeformten Kontakthülsen 80 zu sehen, die die Zapfen 60 von außen umschließen. Vorzugsweise ist die Heizvorrichtung 3 so ausgeführt, dass das Steuergehäuse 10 mit der Steuereinrichtung 15 einfach auf den Rahmen 20 mit dem Heizblock aufgesteckt werden kann. Während hierbei die Stromanschlüsse 50 für die Heizelemente durch entsprechende Bohrungen in das Steuergehäuse eingeführt werden, findet beim Aufstecken der Steuervorrichtung an den Rahmen 20 der formschlüssige Kontakt zwischen den Hülsen 80 der Wärmeleitelemente 90 und den Zapfen am Steuergehäuse 10 statt.

Beim Lüfterausfall wird an den Wärmeleitelementen (Wärmeübertragern) innerhalb von etwa zwei Minuten nahezu die durch die Dotierung vorbestimmte PTC Temperatur erreicht. Ein PTC mit einer Oberflächentemperatur von beispielsweise 200 °C erwärmt dabei die sehr gut wärmeleitende metallische Oberfläche auf ca. 195 °C. Nach vier bis sechs Minuten wird dabei in unmittelbarer Heizungsumgebung die kritische Temperatur von 130°C überschritten.

Ein wirkungsvoller Schutz vor Überhitzung ist gewährleistet wenn eine Abschaltung oder Reduzierung der Heizleistung bei einer am Wärmeübertrager anliegenden (von dem Temperatursensor erfassten) Temperatur etwa 30 Grad unter der erreichbaren PTC-Temperatur (im Beispiel also 200 °C - 30 °C = 170 °C) geschieht. Weiter vorzugsweise erfolgt die Abschaltung oder Reduzierung erst dann, wenn diese Temperatur über einen Zeitraum von mehr als zwei bis drei Minuten anhält. Eine sinnvolle Temperaturschwelle (vorbestimmter Temperaturwert) könnte also etwa bei 170°C liegen, zum Beispiel ein Wert aus dem Intervall von etwa 150 °C oder 160 °C bis 175 °C sein

Ist die Temperatur am Wärmeübertrager auf mindestens 50 Grad unter die erreichbare PTC-Oberflächentemperatur von beispielsweise 200 °C gesunken, so kann davon ausgegangen werden, dass die Wärmeableitung (wieder) funktioniert. Ein geeigneter zweiter vorbestimmter Temperaturwert, dessen Unterschreiten zum Wiederaufschalten der Heizleistung führt, könnte also in diesem Fall bei etwa 150 °C liegen, zum Beispiel ein Wert aus dem Intervall von 130°C oder 140 °C bis 155 °C sein. Wie bereits ausgeführt, muss dabei der zweite vorbestimmte Temperaturwert selbstverständlich unter dem (ersten) vorbestimmten Temperaturwert liegen, dessen Überschreiten zum Reduzieren der Heizleistung führt.

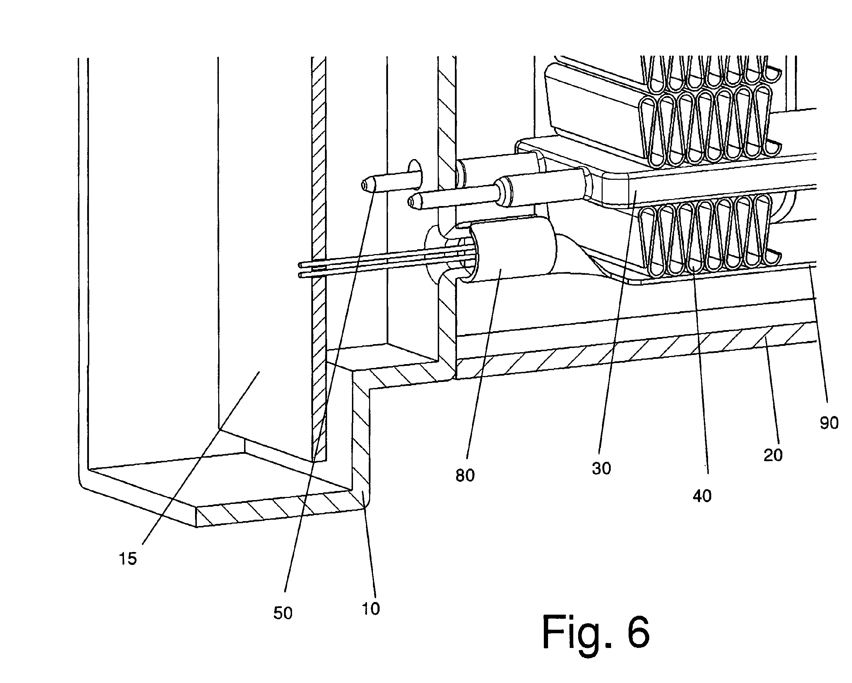

Eine noch detaillierte Darstellung eines Ausschnitts aus Fig. 5 ist in der folgenden Fig. 6 dargestellt. Hierbei ist besonders deutlich zu sehen, wie das Wärmeübertragungselement 90 einerseits eine Wellrippe 40 des Radiators kontaktiert, und andererseits über die Hülse 80 den als Aufnahmeeinrichtung für den Temperatursensor an das Steuergehäuse 10 angeformten Zapfen umschließt.

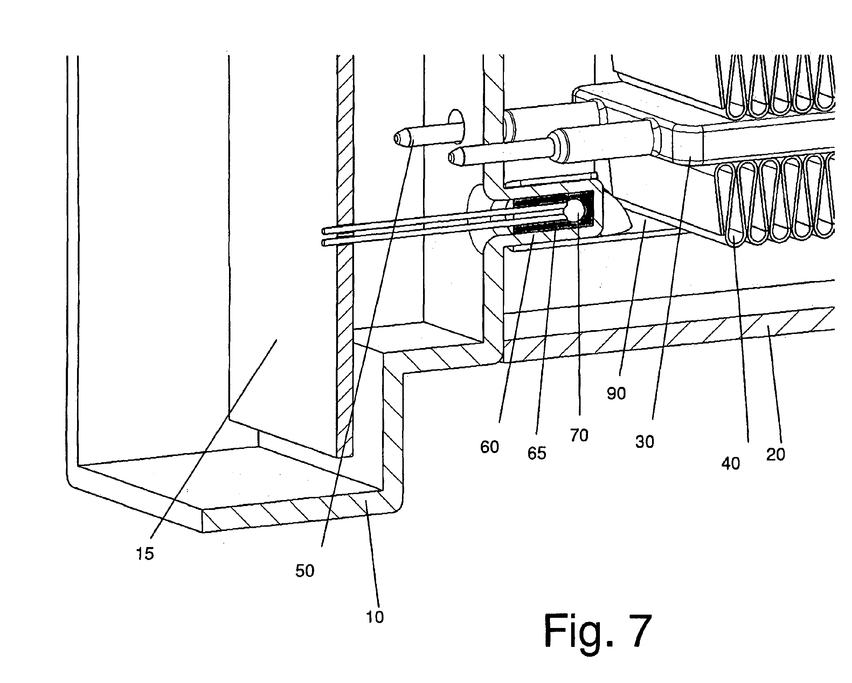

Fig. 7 ist eine Schnittdarstellung eines Details der erfindungsgemäßen Heizvorrichtung aus Fig. 5. Hierbei sieht man insbesondere eine Aufnahmeeinrichtung für den Temperatursensor 70 in Form des in der Trennwand 25 zwischen Steuergehäuse 10 und Aufnahmeraum 35 für den Heizblock ausgebildeten Zapfens 60. Vorzugsweise erfolgt eine Wärme leitende Einbettung des Temperatursensors 70 in die Aufnahmeeinrichtung dadurch, dass innerhalb des hohlen Zapfens 60 ein Wärme leitendes Material 65 in Form einer Vergussmasse oder Wärmeleitpaste vorgesehen ist. Der hohle Zapfen 60 selbst weist nur eine geringe Wandstärke (vorzugsweise im Bereich von ca. 0,5 mm) auf. Durch eine solche konstruktive Gestaltung wird erreicht, dass eine gute Wärmeleitung vom Radiator über den Wärmeübertrager (Wärmeleitelement 90) zu dem Temperatursensor 70 durchgehend ermöglicht wird, obwohl kein direkter Kontakt zwischen dem Wärmeleitelement 90 und dem Temperatursensor 70 stattfindet. Eine Ausführungsform, bei der der Temperatursensor 70 steuereinrichtungsseitig der Trennwand 25 platziert ist, hat insbesondere den Vorteil einer guten Abdichtung des Temperatursensors von Luftstrom, Schmutz und Wasser.

Alternativ zu der im Bild dargestellten wäre auch eine Ausführungsform denkbar, bei der ein Bereich der Wärmeleitelemente 90 durch eine entsprechende Öffnung in der Außenwand (vorzugsweise stirnseitig) der Zapfen 60 direkt an die Temperatursensoren 70 herangeführt wird. In einem solchen Fall ist zusätzlich für eine möglichst gute Abdichtung des Einbaubereichs der Temperatursensoren 70 zu sorgen.

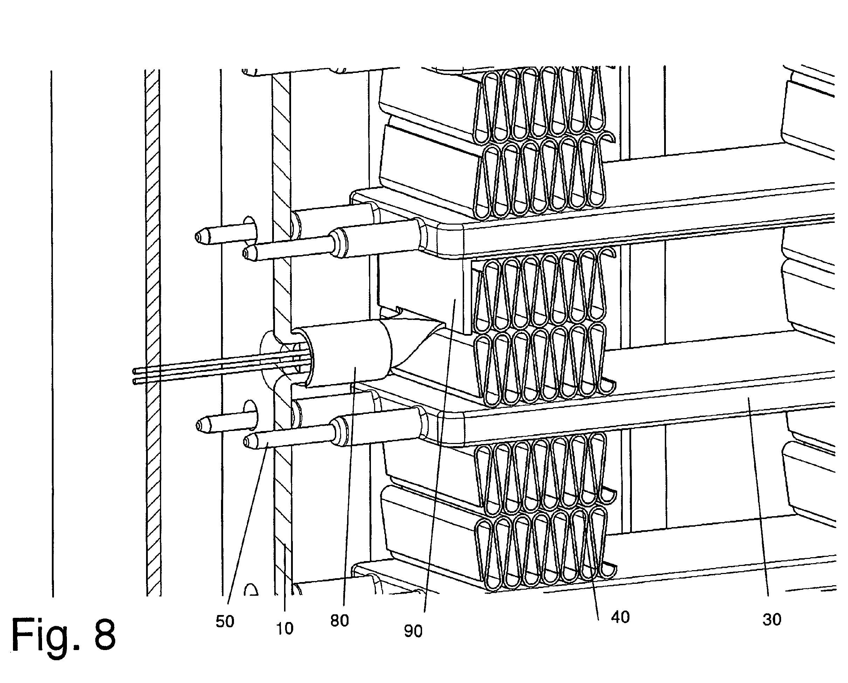

Eine alternative konstruktive Lösung zu den vorstehenden Figuren, bei denen die Wärmeleitelemente 90 Wellrippen 40 des Radiators kontaktieren, ist im Detail in Fig. 8 dargestellt (im Bildausschnitt beispielhaft nur ein Wärmeleitelement 90 entsprechend einem Temperatursensor gezeigt). Hierbei kontaktiert das Wärmeleitelement 90 direkt eines der PTC-Heizelemente 30 (im Bild das oberhalb des Zapfens mit dem Temperatursensor gezeigte Heizelement). Die weiteren im Bild gezeigten und mit entsprechenden Bezugszeichen versehenen Elemente entsprechen jeweils denjenigen in den vorstehenden Zeichnungen, und auf eine erneute Beschreibung wird deshalb an dieser Stelle verzichtet.

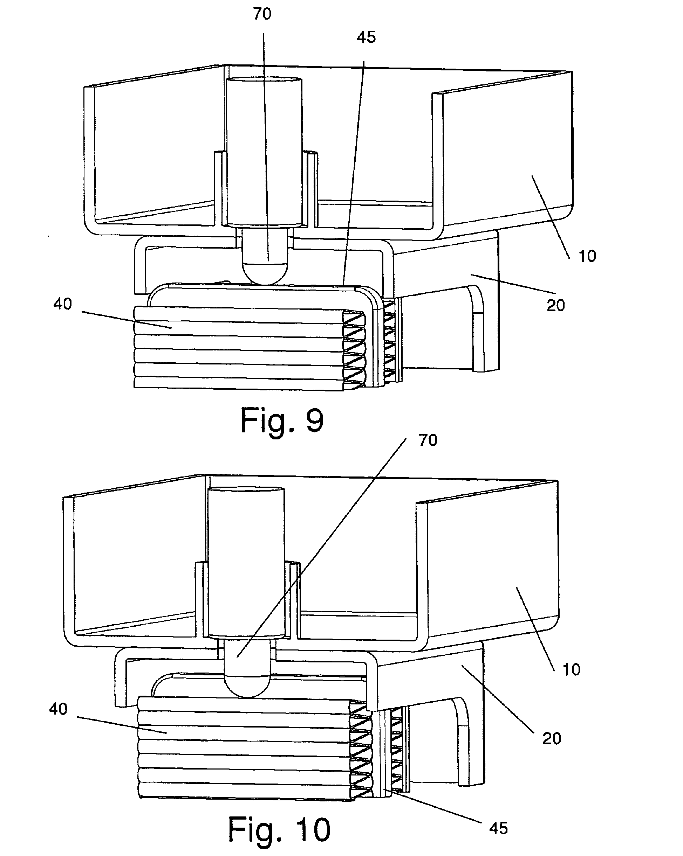

In den folgenden Schnittzeichnungen der Fig. 9, 10 und 11 werden schematisch alternative mögliche Ausführungsformen für die Anordnung der Temperatursensoren in einer erfindungsgemäßen Heizvorrichtung dargestellt (im Bildausschnitt beispielhaft nur ein Temperatursensor gezeigt). Hierbei bedeuten gleiche Bezugszeichen gleiche Komponenten, so dass auf deren erneute Beschreibung verzichtet wird. Die in den Fig. 9 bis 11 dargestellten Bauteile Rahmen 20 und Steuergehäuse 10 sind wiederum Teile eines Gehäuses, welches neben dem Heizblock auch die Komponenten der Steuerelektronik umfasst.

Wie aus den schematischen Darstellungen der Fig. 9 bis 11 weiter zu entnehmen ist, ragt der Temperaturfühler aus dem im oberen Teil der Zeichnung dargestellten Bereich des Steuergehäuses 10 heraus in den unmittelbaren Bereich der Temperaturmessung, der je nach Ausführungsform unterschiedlich gewählt ist. Hierdurch können die gemessenen Temperaturdaten der innerhalb der Steuerelektronik gebildeten Überwachungseinrichtung unmittelbar zur Auswertung zur Verfügung gestellt werden.

In der in Fig. 9 dargestellten Ausführungsform erfolgt der Abgriff der Temperatur mit einem Temperaturfühler 70 durch direkten Kontakt mit einem der Kontaktbleche 45. Dies hat den Vorteil einer besonders großen Nähe des Messpunktes zu den PTC-Heizelementen, und erlaubt deshalb einen besonders unverfälschten Rückschluss auf die PTC-Oberflächentemperaturen.

Eine weitere Alternative mit einer direkten Kontaktierung eines Radiatorelements 40 durch den Temperatursensor 70 ist schematisch in Fig. 10 dargestellt.

Den in Fig. 9 und 10 gezeigten Ausführungsformen ist gemeinsam, dass der Temperatursensor 70 direkt eine Wärme abstrahlende Oberfläche der Heizvorrichtung kontaktiert.

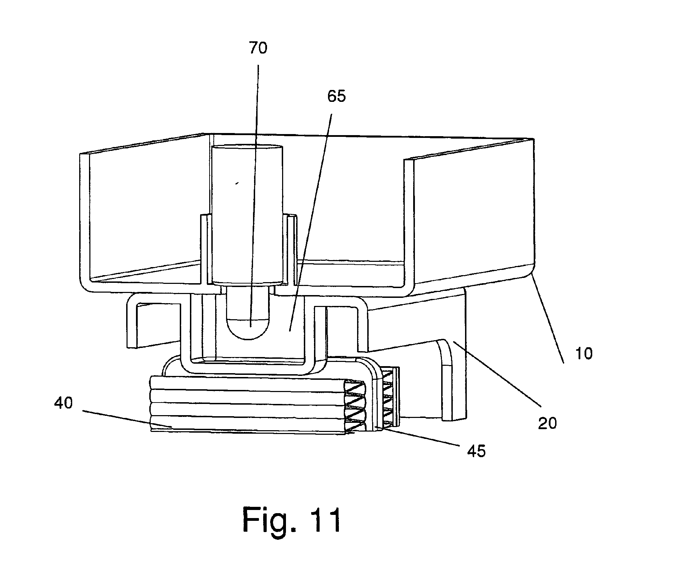

Eine alternative Ausführungsform, ohne Kontakt des Temperatursensors mit einer Oberfläche der Heizvorrichtung, ist in Fig. 11 dargestellt.

In Fig. 11 ragt der Temperaturfühler 70 in einen von dem Luftstrom abgeschlossenen Raum 65 oberhalb eines Teils des Radiators 40 hinein. Der geschlossene Raum 65 ist speziell für den Zweck der Temperaturmessung geschaffen. Da dieser Raum von der Konvektion des Luftstroms abgeschlossen ist, bildet sich in ihm, bedingt durch die von der Oberfläche der Heizvorrichtung (insbesondere Radiator mit Wellrippen 40) ausgehende Wärmestrahlung, ein Wärmestau. Die Wärme staut sich umso mehr, je höher die Oberflächentemperatur der PTC-Elemente und damit die Strahlungstemperatur ist. Damit steigt auch die Temperatur in dem geschlossenen Raum 65 an.

Wenn nun zum Beispiel durch Lüfterausfall oder Verringerung der Strömungsgeschwindigkeit der Kühlungseffekt wegfällt oder sich verringert, dann steigt auch die Temperatur in dem Wärmestauraum 65 gegenüber dem Normalbetrieb entsprechend an, was von dem Temperaturfühler 70 erfasst wird. Da dieser jedoch nicht dem Luftstrom selbst ausgesetzt ist und somit nicht direkt von diesem und seinen Parametern beeinflusst wird, besteht eine gute Korrelation zur PTC-Oberflächentemperatur (die ihrerseits natürlich selbst von dem Kühlungseffekt abhängt).

Die Beziehung zwischen der in dem Stauraum 65 gemessenen Temperatur und der eigentlichen PTC-Oberflächentemperatur hängt natürlich im Einzelfall noch von einer Vielzahl von Parametern ab, insbesondere hinsichtlich der Geometrie, Abstände oder auch der verwendeten Materialien. Deshalb kann hier nur eine ungefähre Größenordnung angegeben werden. Zum Beispiel kann in einer erfindungsgemäßen Vorrichtung eine in dem abgeschlossenen Stauraum 30 von dem Temperatursensor 70 festgestellte Temperatur von ca. 120 °C einer PTC-Oberflächentemperatur von 190 °C bis 200 °C entsprechen. Da diese bereits deutlich jenseits der noch zulässigen Grenze liegt, muss rechtzeitig vorher abgeschaltet werden. Dies kann hier zum Beispiel dann erfolgen, wenn die gemessene Temperatur einen Wert im Bereich von ca. 90 °C bis 100 °C erreicht oder übersteigt.

Der geschichtete Aufbau des Heizungsteils in Form eines Heizregisters ist in Fig. 12 schematisch dargestellt. Zwischen den Radiatorelementen 200 sind PTC-Heizelemente 210 angeordnet. Die beiden gezeigten PTC-Heizelemente 210 stehen mit den Radiatorelementen 200 in Wärme leitender Verbindung. Über die Radiatorelemente 200 wird die von dem PTC-Heizelement 210 erzeugte Wärme an die durch die Radiatorelemente 200 strömende Luft abgegeben.

Auf beiden Seiten der PTC-Heizelemente 210 sind Kontaktbleche 220, 230, 240 angeordnet. Über diese Kontaktbleche wird dem PTC-Heizelement 210 Strom zugeführt.

Der in Fig. 12 gezeigte Aufbau stellt nur schematisch ein mögliches Anordnungsprinzip gemäß einer Ausführungsform eines erfindungsgemäßen Heizers dar. Er zeigt keine Temperatursensoren bzw Wärmeleitelemente, die unterschiedlich angeordnet sein können. Sind Wärmeleitelemente vorgesehen, so können diese insbesondere entweder die Radiatorelemente 200 oder die Heizelemente 210 oder beide (z.B. an deren Kontaktposition) kontaktieren. Vorzugsweise ist der Aufbau unter einer Klemmpressung gehalten, so dass ein besonders guter thermischer und elektrischer Übergang zwischen dem PTC-Heizelement 210 und den Kontaktblechen 220, 230 und 240 besteht. In diesem Fall schließt die Klemmpressung das Wärmeleitelement mit ein, so dass auch hier ein besonders guter thermischer Kontakt besteht. Die Klemmpressung kann zum Beispiel mit zwei Federelementen realisiert werden.

Es kann aber auch ein geklebter Schichtaufbau, der in einem Rahmen gehalten ist, verwendet werden.

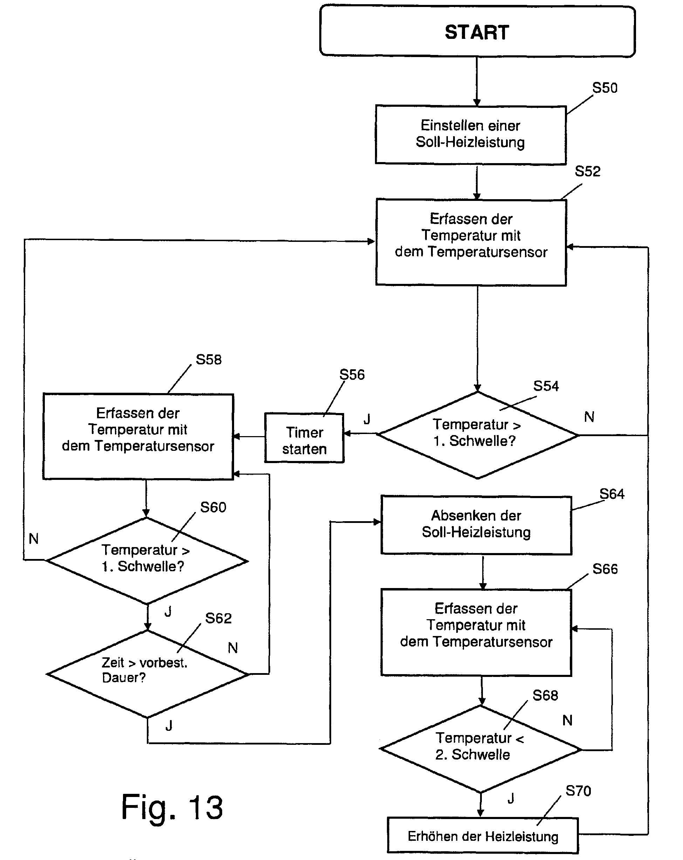

Fig. 13 zeigt ein Ablaufdiagramm beim Betrieb einer erfindungsgemäßen Heizvorrichtung, wobei eine Überhitzung festgestellt wird und als Gegenmaßnahme eine Temperaturregelung gemäß einer Ausführungsform der Erfindung ausgeführt wird. Zur Vereinfachung der Darstellung wird in dem folgenden Beispiel angenommen, dass ein Temperatursensor nur einer Heizstufe zugeordnet ist, und sofern im Einzelfall nichts anderes ausgeführt, die Steuervorgänge auf Grund der Messergebnisse des Temperatursensors genau diese zugeordnete Heizstufe betreffen. Sollten einem Temperatursensor in einer Ausführungsform mehrere Heizstufen zugeordnet sein, so werden die beschriebenen Steuervorgänge entsprechend auf alle diese Heizstufen angewendet.

Zunächst wird im Schritt S50 eine Soll-Heizleistung der Heizstufe eingestellt. Dies kann entweder manuell geschehen, oder automatisch durch Vorgabe des Heiz-/Klimagerätes, beispielsweise aufgrund der Auswertung bestimmter Umgebungsparameter, insbesondere einer Temperatur und von Vorgaben eines Benutzers, oder aber aufgrund der im Bordnetz vorhandenen elektrischen Leistung, die für andere Zwecke, zum Beispiel Traktion, nicht benötigt wird.

Nach dem Start des Betriebs der Heizvorrichtung wird die Temperatur der PTC-Heizelemente 30 mit Hilfe eines erfindungsgemäßen Temperatursensors 70 permanent überwacht (Schritt S52). Hierbei stellt eine Überwachungseinrichtung im Schritt S54 fest, ob die gemessene Temperatur einen vorgegebenen Schwellwert überschreitet (Schritt S54). Solange dies nicht der Fall ist (S54:N), stellt die Überwachungseinrichtung fest dass ein normaler Betriebszustand vorliegt, und kein Eingreifen erforderlich ist. Der Temperatursensor 70 erfasst weiterhin laufend die Temperatur (S52).

Sobald jedoch eine Erhöhung der Temperatur über den vorgegebenen Schwellwert hinaus festgestellt wird (S54:J), stellt die Überwachungseinrichtung fest, dass eine unzulässig hohe Betriebstemperatur vorliegt. Falls der Schwellwert nur kurzzeitig überschritten wird, kann dies eine Zufallsschwankung der Temperatur sein. Anderenfalls, wenn die unzulässig hohe Temperatur während einer längeren Zeitdauer, zum Beispiel länger als etwa zwei Minuten, besteht, ist jedoch von einer Unterbrechung oder Verlangsamung des Luftstroms, insbesondere von einem Lüfterausfall auszugehen. Um dies zu bestätigen, wird von der Steuereinrichtung im Schritt S56 zunächst ein Timer (Zeitzählung) gestartet und die Temperatur wird im Schritt S58 weiterhin von dem Temperatursensor 70 erfasst. Die Überwachungseinrichtung überprüft im Schritt S60 weiter, ob die Temperatur oberhalb des vorgegebenen Schwellwerts liegt. Wenn im Schritt S54 oder S60 festgestellt wird, dass dies nicht (mehr) der Fall ist (S54:N, S60:N), so wird das Verfahren mit der weiteren Erfassung der Temperatur gemäß Schritt S52 fortgesetzt.

Ergibt jedoch die Überwachung im Schritt S60, dass die Temperatur weiterhin höher als der Schwellwert ist (S60:J), so wird im nachfolgenden Schritt S62 überprüft, ob die von dem Timer gemessene Zeit seit dem ersten Auftreten der den Schwellwert überschreitenden Temperatur größer ist als die festgelegte Zeitdauer. Ist dies (noch) nicht der Fall (S62:N), so wird die Temperatur gemäß Schritt S58 weiterhin erfasst und gemäß Schritt S60 mit der Schwelltemperatur verglichen. Anderenfalls (S62:J) ist davon auszugehen, dass keine zufällige Temperaturschwankung vorliegt, sondern eine Störung des Luftstroms, und Gegenmaßnahmen ergriffen werden müssen. In diesem Fall geht das Verfahren über zum Schritt S64, in welchem die im Schritt S50 vorgegebene (eingestellte) Soll-Heizleistung abgesenkt wird. Vorzugsweise kann das Absenken der Soll-Heizleistung im Schritt S64 auf Null erfolgen, die Heizleistung der betreffenden Heizstufe also komplett abgeschaltet werden. Die Abschaltung oder das Absenken der Heizleistung kann zum Beispiel stufenweise oder kontinuierlich, insbesondere linear, erfolgen. In einer alternativen Ausführungsform kann anstelle nur des unmittelbar betroffenen Heizkreises (dessen Temperatursensor die unzulässige Erwärmung festgestellt hat) die gesamte Heizvorrichtung in ihrer Leistung reduziert bzw. abgeschaltet werden. Denkbar ist es zum Beispiel auch, eine entsprechende Entscheidung von der absoluten Höhe der festgestellten Temperatur abhängig zu machen, also zum Beispiel die Heizvorrichtung komplett abzuschalten, wenn die festgestellte Temperatur den Schwellwert stark übersteigt. Alternativ ist es auch denkbar, zunächst nur den betroffenen Heizkreis abzuschalten oder dessen Leistung zu reduzieren und die Reduzierung bzw. Abschaltung auf weitere Heizkreise, insbesondere die gesamte Heizvorrichtung auszudehnen, wenn dies über einen vorbestimmten Zeitraum nicht zu einer Absenkung der Temperatur unter den Schwellwert führt. Weiterhin vorzugsweise kann das Vorliegen einer Störung zum Beispiel durch ein akustisches und/oder optisches Signal angezeigt werden.

Gemäß einer bevorzugten Ausführungsform wird die Temperatur nachfolgend im Schritt S66 auch weiterhin mit dem Temperatursensor 70 erfasst. Dabei wird die Temperatur von der Überwachungseinrichtung nach dem Reduzieren oder Abschalten der Heizleistung mit einem zweiten vorbestimmten Schwellwert verglichen, der niedriger als der ursprüngliche Schwellwert ist, bei dessen Überschreiten die Heizleistung abgesenkt wurde. Stellt die Überwachungseinrichtung im Schritt S68 fest, dass die Temperatur jetzt diesen zweiten Schwellwert unterschreitet, so wird der Steuereinrichtung 15 signalisiert, dass die Heizleistung im nachfolgenden Schritt S70 wieder erhöht werden kann. Daran anschließend schreitet das Verfahren zum Schritt S52 zurück.

Auf diese Weise kann gewährleistet werden, dass die Heizung eigenständig auf die maximal zulässige Temperatur geregelt wird, aber keine dauerhafte Abschaltung erfolgt.

Die vorliegende Erfindung ist jedoch nicht auf die im Zusammenhang mit den Figuren vorstehend näher beschriebenen Ausführungsbeispiele beschränkt. Mögliche Modifikationen im Rahmen der Patentansprüche sind dem Fachmann gegenwärtig.

Zusammenfassend, betrifft die vorliegende Erfindung eine elektrische Kraftfahrzeugheizung zur Erwärmung eines Luftstroms mit mehreren PTC-Heizstufen, bei der zum Zwecke des Überhitzungsschutzes mehrere, den Heizstufen individuell zugeordnete Temperatursensoren vorgesehen sind. Hiermit kann die Gefahr einer Überhitzung im Bereich bestimmter Heizstufen erkannt und lokalisiert werden, und es kann zielgenau durch eine Reduzierung der Heizleistung bzw. ein Abschalten eingegriffen werden. Insbesondere können zunächst selektiv nur unmittelbar betroffene bzw. benachbarte Heizstufen abgeschaltet bzw. in ihrer Leistung heruntergefahren werden.

## Patentansprüche

1. Elektrische Heizvorrichtung für ein Kraftfahrzeug, zur Erwärmung eines Luftstroms (4), umfassend:
eine Mehrzahl von separat ansteuerbaren Heizstufen ,
eine Steuereinrichtung (15) zum Einstellen der Heizleistung jeder Heizstufe und
eine Mehrzahl von Temperatursensoren (70), die mit der Steuereinrichtung (15) verbunden sind, wobei jeweils einer der Temperatursensoren (70) wenigstens einer der Heizstufen zugeordnet ist, so dass eine von einem der Temperatursensoren (70) erfasste Temperatur in dem Bereich der wenigstens einen zugeordneten Heizstufe lokalisiert werden kann,
**dadurch gekennzeichnet, dass**
die Heizstufen jeweils wenigstens ein PTC-Heizelement (30) umfassen und
die Temperatursensoren (70) außerhalb des Luftstroms (4) angeordnet sind.

2. Elektrische Heizvorrichtung nach Anspruch 1, wobei die Steuereinrichtung (15) ausgebildet ist, die Heizleistung in Abhängigkeit von den durch die Temperatursensoren (70) erfassten Temperaturen zu reduzieren.

3. Elektrische Heizvorrichtung nach Anspruch 1 oder 2, wobei die Steuereinrichtung (15) eine Überwachungseinrichtung einschließt, zum Überwachen, ob eine von einem Temperatursensor erfasste Temperatur einen vorbestimmten Temperaturwert überschreitet, und die Heizleistung der zugeordneten wenigstens einen Heizstufe reduziert, wenn die Überwachungseinrichtung feststellt, dass die von dem Temperatursensor (70) erfasste Temperatur den vorbestimmten Temperaturwert überschreitet.

4. Elektrische Heizvorrichtung nach Anspruch 3, wobei die Steuereinrichtung (15) die Heizleistung erst dann reduziert, wenn die von der Überwachungseinrichtung festgestellte Überschreitung des vorbestimmten Temperaturwertes länger als eine vorbestimmte Zeitdauer andauert.

5. Elektrische Heizvorrichtung nach Anspruch 3 oder 4, wobei
die Überwachungseinrichtung nach dem Reduzieren der Heizleistung überwacht, ob die von dem der Heizstufe zugeordneten Temperatursensor (70) erfasste Temperatur den vorbestimmten Temperaturwert wieder unterschreitet, und
sequentiell die Heizleistung weiterer Heizstufen reduziert, wenn die erfasste Temperatur nach einer vorbestimmten Zeitdauer den vorbestimmten Temperaturwert nicht wieder unterschreitet.

6. Elektrische Heizvorrichtung nach Anspruch 5, wobei zunächst die Heizleistung von Heizstufen reduziert wird, die einer Heizstufe, deren Heizleistung bereits reduziert wurde, benachbart sind, und nach einer weiteren vorbestimmten Zeitdauer die Heizleistung aller Heizstufen reduziert wird.

7. Elektrische Heizvorrichtung nach einem der Ansprüche 2 bis 6, wobei die Steuereinrichtung (15) die betreffende Heizleistung stufenweise oder kontinuierlich reduziert.

8. Elektrische Heizvorrichtung nach einem der Ansprüche 2 bis 7, wobei die Steuereinrichtung (15) die betreffende Heizleistung auf Null reduziert.

9. Elektrische Heizvorrichtung nach einem der Ansprüche 3 bis 8, wobei
die Überwachungseinrichtung nach dem Reduzieren der Heizleistung überwacht, ob die von dem Temperatursensor (70) erfasste Temperatur einen zweiten vorbestimmten Temperaturwert unterschreitet, wobei der zweite vorbestimmte Temperaturwert niedriger ist als der vorbestimmte Temperaturwert, der zum Reduzieren der Heizleistung führt, und die Steuereinrichtung (15) ausgebildet ist, die Heizleistung wieder zu erhöhen, wenn die Überwachungseinrichtung feststellt, dass die von dem Temperatursensor (70) erfasste Temperatur den zweiten vorbestimmten Temperaturwert unterschreitet.

10. Elektrische Heizvorrichtung nach einem der vorherigen Ansprüche, weiterhin umfassend
ein Gehäuse mit einem Rahmen (20), der die PTC-Heizelemente (10) der einzelnen Heizstufen aufnimmt, und
eine Mehrzahl von Wärmeleitelementen (90), die jeweils Wärme von der wenigstens einen Heizstufe zu dem zugeordneten Temperatursensor (70) leiten.

11. Elektrische Heizvorrichtung nach Anspruch 10, weiterhin umfassend mit den PTC-Heizelementen (30) in Wärme leitendem Kontakt stehende Radiatorelemente (40) zur Wärmeabstrahlung, wobei die Wärmeleitelemente (90) jeweils wenigstens ein Radiatorelement (40) kontaktieren.

12. Elektrische Heizvorrichtung nach Anspruch 10 oder 11, wobei
das Gehäuse ein separates Steuergehäuse (10) ausbildet, in dem die Steuereinrichtung (15) angeordnet ist, und
das Gehäuse zwischen den Heizstufen und der Steuereinrichtung (15) eine Trennwand (25) ausbildet, die Aufnahmeeinrichtungen (60) aufweist, in die die Temperatursensoren (70) Wärme leitend eingebettet sind.

13. Elektrische Heizvorrichtung nach einem der Ansprüche 1 bis 9, weiterhin umfassend mit den PTC-Heizelementen (30) in Wärme leitendem Kontakt stehende Radiatorelemente (40) zur Wärmeabstrahlung, wobei die Temperatursensoren (70) jeweils in einen von dem Luftstrom (4) abgeschlossenen Raum in unmittelbarer Nähe eines der Radiatorelemente (409 hineinragen.

14. Elektrische Heizvorrichtung nach einem der Ansprüche 1 bis 9, wobei die Temperatursensoren (70) jeweils direkt eine Wärme abstrahlende Oberfläche einer Heizstufe kontaktieren.

15. Elektrische Heizvorrichtung nach Anspruch 14, wobei die Temperatursensoren jeweils ein mit einem PTC-Heizelement (30) in Wärme leitendem Kontakt stehendes Radiatorelement (40) kontaktieren.

## Claims

1. Electric heating device for a motor vehicle, for heating an air flow (4), comprising:
a plurality of separately actuatable heating stages,
a controller (15) for adjusting the heating power of each heating stage, and
a plurality of temperature sensors (70) connected to the controller (15), each temperature sensor (70) being associated with at least one heating stage such that a temperature detected by one of the temperature sensors (70) can be located in the region of the at least one associated heating stage,
**characterised in that**
the heating stages each comprise at least one PTC heating element (30) and
the temperature sensors (70) are arranged outside the air flow (4).

2. Electric heating device according to claim 1, wherein the controller (15) is designed to reduce the heating power on the basis of the temperatures detected by the temperature sensors (70).

3. Electric heating device according to claim 1 or claim 2, wherein the controller (15) includes a monitoring apparatus for monitoring whether a temperature detected by a temperature sensor exceeds a predetermined temperature value, and reduces the heating power of the at least one associated heating stage if the monitoring apparatus determines that the temperature detected by the temperature sensor (70) exceeds the predetermined temperature value.

4. Electric heating device according to claim 3, wherein the controller (15) does not reduce the heating power until the predetermined temperature value has been exceeded, as detected by the monitoring apparatus, for a longer period of time than a predetermined time period.

5. Electric heating device according to claim 3 or claim 4, wherein,
once the heating power has been reduced, the monitoring apparatus monitors whether the temperature detected by the temperature sensor (70) associated with the heating stage falls back below the predetermined temperature value, and
sequentially reduces the heating power of other heating stages if the detected temperature does not fall back below the predetermined temperature value after a predetermined time period.

6. Electric heating device according to claim 5, wherein the heating power of those heating stages which are adjacent to a heating stage that has already had its heating power reduced is firstly reduced, and the heating power of all the heating stages is reduced after an additional predetermined time period.

7. Electric heating device according to any of claims 2 to 6, wherein the controller (15) reduces the relevant heating power either in steps or continuously.

8. Electric heating device according to any of claims 2 to 7, wherein the controller (15) reduces the relevant heating power to zero.

9. Electric heating device according to any of claims 3 to 8, wherein,
once the heating power has been reduced, the monitoring apparatus monitors whether the temperature detected by the temperature sensor (70) falls below a second predetermined temperature value, wherein the second predetermined temperature value is lower than the predetermined temperature value which causes the heating power to be reduced, and
the controller (15) is designed to increase the heating power again if the monitoring apparatus determines that the temperature detected by the temperature sensor (70) falls below the second predetermined temperature value.

10. Electric heating device according to any of the preceding claims, further comprising
a housing having a frame (20) which incorporates the PTC heating elements (10) of the individual heating stages, and
a plurality of heat-conducting elements (90) which each conduct heat from the at least one heating stage to the associated temperature sensor (70).

11. Electric heating device according to claim 10, further comprising radiator elements (40) for thermal radiation, which are in heat-conducting contact with the PTC heating elements (30), wherein the heat-conducting elements (90) each contact at least one radiator element (40).

12. Electric heating device according to claim 10 or claim 11, wherein
the housing forms a separate control housing (10) in which the controller (15) is arranged, and
the housing forms a partition (25) between the heating stages and the controller (15), which partition has receptacles (60) in which the temperature sensors (70) are embedded in a heat-conducting manner.

13. Electric heating device according to any of claims 1 to 9, further comprising radiator elements (40) for thermal radiation, which are in heat-conducting contact with the PTC heating elements (30), wherein the temperature sensors (70) each project into a chamber, which is closed off from the air flow (4), in the direct proximity of one of the radiator elements (409.

14. Electric heating device according to any of claims 1 to 9, wherein the temperature sensors (70) each directly contact a heat-radiating surface of a heating stage.

15. Electric heating device according to claim 14, wherein the temperature sensors each contact a radiator element (40) that is in heat-conducting contact with a PTC heating element (30).

## Revendications

1. Dispositif de chauffage électrique pour un véhicule automobile, destiné à échauffer un flux d'air (4), comprenant :
une pluralité d'étages de chauffage pouvant être activés séparément par commande,
un dispositif de commande (15) destiné à régler la puissance de chauffe de chaque étage de chauffage, et
une pluralité de capteurs de température (70), qui sont reliés au dispositif de commande (15), respectivement l'un des capteurs de température (70) étant associé à au moins l'un des étages de chauffage, de sorte qu'une température relevée par l'un des capteurs de température (70) peut être localisée dans la zone dudit au moins un étage de chauffage associé,
**caractérisé en ce que**
les étages de chauffage comportent chacun respectivement au moins élément chauffant (30) du type PTC (à coefficient de température positif), et
les capteurs de température (70) sont agencés en-dehors du flux d'air (4).

2. Dispositif de chauffage électrique selon la revendication 1, dans lequel le dispositif de commande (15) est conçu pour réduire la puissance de chauffe en fonction des températures relevées par les capteurs de température (70).

3. Dispositif de chauffage électrique selon la revendication 1 ou la revendication 2, dans lequel le dispositif de commande (15) intègre un dispositif de surveillance destiné à surveiller si une température relevée par un capteur de température dépasse une valeur de température prédéterminée, et réduit la puissance de chauffe dudit au moins un étage de chauffage associé, lorsque le dispositif de surveillance constate que la température relevée par le capteur de température (70) dépasse ladite valeur de température prédéterminée.

4. Dispositif de chauffage électrique selon la revendication 3, dans lequel le dispositif de commande (15) ne réduit la puissance de chauffe que lorsque le dépassement de la valeur de température prédéterminée, constaté par le dispositif de surveillance, dure plus longtemps qu'une durée prédéterminée.

5. Dispositif de chauffage électrique selon la revendication 3 ou la revendication 4, dans lequel le dispositif de surveillance, après la réduction de la puissance de chauffe, surveille si la température relevée par le capteur de température (70) associé à l'étage de chauffage, passe à nouveau en-dessous de la valeur de température prédéterminée, et
réduit séquentiellement la puissance de chauffe d'autres étages de chauffage lorsque la température relevée ne passe pas à nouveau en-dessous de la valeur de température prédéterminée après une durée prédéterminée.

6. Dispositif de chauffage électrique selon la revendication 5, dans lequel on réduit tout d'abord la puissance de chauffe d'étages de chauffage, qui sont voisins d'un étage de chauffage dont la puissance de chauffe a déjà été réduite, et après une autre durée prédéterminée, on réduit la puissance de chauffe de tous les étages de chauffage.

7. Dispositif de chauffage électrique selon l'une des revendications 2 à 6, dans lequel le dispositif de commande (15) réduit la puissance de chauffe considérée, de manière graduelle ou continue.

8. Dispositif de chauffage électrique selon l'une des revendications 2 à 7, dans lequel le dispositif de commande (15) réduit la puissance de chauffe considérée, à une valeur nulle.

9. Dispositif de chauffage électrique selon l'une des revendications 3 à 8, dans lequel
le dispositif de surveillance, après réduction de la puissance de chauffe, surveille si la température relevée par le capteur de température (70) passe en-dessous d'une deuxième valeur de température prédéterminée, la deuxième valeur de température prédéterminée étant inférieure à ladite valeur de température prédéterminée, qui a conduit à la réduction de la puissance de chauffe, et
le dispositif de commande (15) est conçu pour augmenter à nouveau la puissance de chauffe lorsque le dispositif de surveillance constate que la température relevée par le capteur de température (70) passe en-dessous de la deuxième valeur de température prédéterminée.

10. Dispositif de chauffage électrique selon l'une des revendications précédentes, comprenant en outre,
un carter ou boitier avec un cadre (20), qui reçoit les éléments chauffants PTC (30) des étages de chauffage individuels, et
une pluralité d'éléments de conduction thermique (90), qui transfèrent respectivement de la chaleur dudit au moins un étage de chauffage au capteur de température (70) associé.

11. Dispositif de chauffage électrique selon la revendication 10, comprenant, en outre, des éléments de radiateur (40) en contact de transmission de chaleur avec les éléments chauffants PTC (30) et destinés à rayonner la chaleur, les éléments de conduction thermique (90) entrant en contact respectivement avec au moins un élément de radiateur (40).

12. Dispositif de chauffage électrique selon la revendication 10 ou la revendication 11, dans lequel le carter ou boitier forme un carter ou boitier de commande (10) séparé, dans lequel est agencé le dispositif de commande (15), et
le carter ou boitier forme, entre les étages de chauffage et le dispositif de commande (15), une paroi de séparation (25), qui présente des logements de réception (60) dans lesquels sont encastrés, en permettant la transmission de chaleur, les capteurs de température (70).

13. Dispositif de chauffage électrique selon l'une des revendications 1 à 9, comprenant, en outre, des éléments de radiateur (40) en contact de transmission de chaleur avec les éléments chauffants PTC (30) et destinés à rayonner la chaleur, les capteurs de température (70) s'engageant respectivement dans un espace fermé par rapport au flux d'air (4), à proximité immédiate de l'un des éléments de radiateur (40).

14. Dispositif de chauffage électrique selon l'une des revendications 1 à 9, dans lequel les capteurs de température (70) sont respectivement en contact direct avec une surface rayonnant de la chaleur, d'un étage de chauffage.

15. Dispositif de chauffage électrique selon la revendication 14, dans lequel les capteurs de température sont respectivement en contact avec un élément de radiateur (40) en contact de transmission de chaleur avec un élément chauffant PTC (30).
